(19) Europäisches Patentamt
European Patent Office
Office européen des brevets

(11) **EP 2 618 129 B1**

(12) **EUROPÄISCHE PATENTSCHRIFT**

(45) Veröffentlichungstag und Bekanntmachung des Hinweises auf die Patenterteilung:
**01.11.2017   Patentblatt 2017/44**

(51) Int Cl.:
**G01N 21/3577** $^{(2014.01)}$   **G01N 21/33** $^{(2006.01)}$
**G01N 21/80** $^{(2006.01)}$

(21) Anmeldenummer: **13151976.1**

(22) Anmeldetag: **18.01.2013**

(54) **Verfahren zur Ermittlung des pH-Wertes einer wässrigen Flüssigkeit und entsprechende Sensoranordnung**

Method of determining the pH-value of an aqueous liquid and corresponding sensor arrangement

Procédé de détermination du pH d'un liquide aqueux et agencement de capteur correspondent

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2012   DE 102012100540**

(43) Veröffentlichungstag der Anmeldung:
**24.07.2013   Patentblatt 2013/30**

(73) Patentinhaber: **Airbus Defence and Space GmbH 82024 Taufkirchen (DE)**

(72) Erfinder:
 • **Müller, Gerhard**
   **85567 Grafing (DE)**
 • **Helwig, Andreas**
   **80469 München (DE)**
 • **Friedberger, Alois**
   **85667 Oberpframmern (DE)**
 • **Hackner, Angelika**
   **81679 München (DE)**

(74) Vertreter: **Kastel, Stefan et al
Kastel Patentanwälte
St.-Cajetan-Straße 41
81669 München (DE)**

(56) Entgegenhaltungen:
EP-A2- 2 505 992          WO-A1-2009/150325
DE-A1-102005 051 583     US-A- 6 107 691
US-A1- 2004 181 131      US-A1- 2008 285 011
US-B1- 7 842 507

 • JAMES L. WEISHAAR ET AL: "Evaluation of Specific Ultraviolet Absorbance as an Indicator of the Chemical Composition and Reactivity of Dissolved Organic Carbon", ENVIRONMENTAL SCIENCE & TECHNOLOGY, Bd. 37, Nr. 20, 1. Oktober 2003 (2003-10-01), Seiten 4702-4708, XP055060315, ISSN: 0013-936X, DOI: 10.1021/es030360x
 • MARTZ T R ET AL: "A SUBMERSIBLE AUTONOMOUS SENSOR FOR SPECTROPHOTOMETRIC PH MEASUREMENTS OF NATURAL WATERS", ANALYTICAL CHEMISTRY, AMERICAN CHEMICAL SOCIETY, US, Bd. 75, Nr. 8, 15. April 2003 (2003-04-15) , Seiten 1844-1850, XP001170686, ISSN: 0003-2700, DOI: 10.1021/AC020568L

EP 2 618 129 B1

**Beschreibung**

Die Erfindung betrifft ein Verfahren zur Ermittlung des pH-Wertes einer wässrigen Flüssigkeit, ein Verfahren zur Überwachung des pH-Wertes einer wässrigen Flüssigkeit, ein Verfahren zur Gewinnung von Trinkwasser aus einem Treibstoff für Luftfahrzeuge sowie eine Sensoranordnung zur Ermittlung des pH-Wertes einer wässrigen Flüssigkeit.

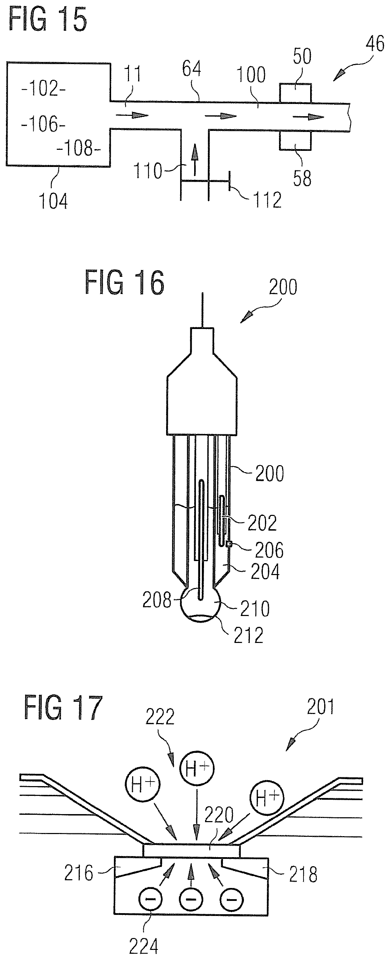

Brennstoffzellen, die mit Kerosin betrieben werden, erzeugen neben elektrischem Strom auch deoxygenierte Luft und Wasser. Um das so erzeugte Wasser zu Trinkwasser aufzubereiten, muss es mineralisiert werden. Der Mineralisierungsprozess kann mit einem pH-Sensor verfolgt werden, der über den pH-Wert des Wassers bestimmt, ob die Mineralisation des Wassers aus der Brennstoffzelle bereits ausreichend ist, dass es die Qualität von Trinkwasser hat. Üblicherweise wird der pH-Wert über in Fig. 16 gezeigte ionenselektive Elektroden, wie beispielsweise eine Glaselektrode 200, oder über ionensensitive Feldeffekttransistoren 201, wie in Fig. 17 gezeigt, gemessen.

Bei Verwendung einer in Fig. 16 gezeigten Glaselektrode 200 steht eine Referenzelektrode 202, die zumeist in eine 0,1 molare KCl-Lösung 204 taucht, über ein Diaphragma 206 mit einer Messlösung, deren pH-Wert bestimmt werden soll, in elektrischem Kontakt. Das Diaphragma 206 ermöglicht dabei zwar den elektrischen Kontakt mit der Messlösung, verhindert den Stoffaustausch zwischen der Messlösung und der KCl-Lösung 204 jedoch weitestgehend.

Im Inneren der Glaselektrode 200 ist eine Messelektrode 208 angeordnet, die zumeist in eine auf pH=7 eingestellte Phosphatpufferlösung als innere Lösung 210 eintaucht. Die Messelektrode 208 steht über eine sehr dünne Glasmembran 212 in leitender Verbindung mit der Messlösung. In der Glasmembran 212 befinden sich Natrium- und Lithiumionen, die frei beweglich sind, die Glasmembran 212 ist für Wasserstoffionen undurchlässig.

Bei Kontakt mit der wässrigen Lösung beginnt die Glasmembran 212, an der Oberfläche aufzuquellen, und Wasserstoffionen können Gitterplätze an Sauerstoffanionen der Glasmembran 212 einnehmen. Bei einem niedrigen pH-Wert werden dadurch die Natrium- und Lithiumionen in die Membran zurückgedrängt, so dass an der Messelektrode 208 ein verändertes Potential gemessen werden kann. Bei einem hohen pH-Wert dagegen entsteht ein Potential mit entgegengesetztem Vorzeichen, da der Prozess in die andere Richtung abläuft.

Alternativ zur Glaselektrode 200 kann ein ionensensitiver Feldeffekttransistor 201 eingesetzt werden, der als einfacher Transistor mit Spannungsquelle 216 und Spannungssenke 218 versehen ist, die durch einen Isolator 220 voneinander getrennt sind.

An dem Isolator 220, der zumeist aus einem Oxidgitter gebildet ist, lagern sich Wasserstoffionen 222 aus der Messlösung an, deren pH-Wert gemessen werden soll. Dabei entsteht eine positive Spannung auf der Außenseite des Isolators 220, die auf der Innenseite des Isolators 220 gespiegelt wird. Das bedeutet, dort entsteht eine negative Spannung 224. Je höher der pH-Wert der Messlösung ist, d.h. je weniger $H^+$-Ionen in der Messlösung vorliegen, desto weniger Wasserstoffionen 222 lagern sich an dem Isolator 220 an und die negative Spannung, die zwischen Spannungsquelle 216 und Spannungssenke 218 fließt, sinkt. Umgekehrt steigt die Spannung zwischen der Spannungsquelle 216 und der Spannungssenke 218 bei niedrigerem pH-Wert, da sich hier mehr Wasserstoffionen 222 an dem Isolator 220 anlagern können.

Die beiden in Fig. 16 und Fig. 17 gezeigten Messmethoden zur Ermittlung des pH-Wertes einer Messlösung haben beide den Nachteil, dass sie in das zu vermessende Medium eingetaucht werden müssen, um somit mit ihm in Kontakt kommen. Es besteht dabei die Gefahr der Verunreinigung der Messlösung und auch des jeweiligen Sensors.

Außerdem müssen die Sensoren bei elektrochemischen pH-Messungen in regelmäßigen Abständen rekalibriert werden, um zuverlässige und reproduzierbare Messergebnisse des pH-Wertes zu erhalten.

US 2008/0285011 A1 offenbart eine Vorrichtung zur Verwendung für die Messung des freien Chlorgehalts in einer Lösung von halogeniertem Schwimmbad/Heilbad-Wasser, die eine Einrichtung zur Einstellung des pH-Wertes einschließt.

US 7,842,507 B1 beschreibt ein System und ein Verfahren zur direkten Messung der Konzentration in Meerwasser durch Ultraviolett-Absorptionsspektroskopie. Weiterhin wird ein spektroskopisches Verfahren zur Bestimmung des pH-Wertes mit Thymolblau als pH-Indikator beschrieben.

Aufgabe der Erfindung ist es daher, ein Verfahren zur Ermittlung des pH-Wertes einer Flüssigkeit vorzuschlagen, das die oben genannten Nachteile überwindet.

Diese Aufgabe wird mit einem Verfahren zur Ermittlung des pH-Wertes einer Flüssigkeit mit der Merkmalskombination des Anspruches 1 gelöst.

Ein Verfahren zur Überwachung des pH-Wertes einer Flüssigkeit, ein Verfahren zur Gewinnung von Trinkwasser aus einem Treibstoff für Luftfahrzeuge sowie eine Sensoranordnung zur Ermittlung des pH-Wertes einer Flüssigkeit sind Gegenstand der Nebenansprüche.

Vorteilhafte Ausgestaltungen der Erfindung sind Gegenstand der Unteransprüche.

Ein Verfahren zur Ermittlung des pH-Wertes einer wässrigen Flüssigkeit umfassend die Flüssigkeitsmoleküle $H_2O$, $OH^-$ und $H_3O^+$ weist die folgenden Schritte auf:

a) Bestrahlen der wässrigen Flüssigkeit mit ultraviolettem Licht zur Anregung von elektronischen Übergängen in

den Flüssigkeitsmolekülen $H_2O$, $OH^-$ und $H_3O^+$ der wässrigen Flüssigkeit;

b) Erfassen des von der wässrigen Flüssigkeit transmittierten Intensitätsanteils des ultravioletten Lichts mit einer Detektoreinrichtung;

c) Erzeugen einer Wellenlängen-Intensitäts-Absorptionscharakteristik aus dem erfassten Intensitätsanteil, die die im Wellenlängenbereich von 100 bis 300 nm liegende, durch die Anregung von elektronischen Übergängen in den Flüssigkeitsmolekülen $H_2O$, $OH^-$ und $H_3O^+$ der wässrigen Flüssigkeit hervorgerufene UV-Absorptionskante umfasst; und

d) Zuordnen der erzeugten Absorptionscharakteristik zu einer einem bestimmten pH-Wert der wässrigen Flüssigkeit zugehörenden Referenz-Absorptionscharakteristik gemäß der Position der UV-Absorptionskante (14).

Das erfindungsgemäße Verfahren basiert auf der Erkenntnis, dass Flüssigkeiten, insbesondere wässrige Lösungen, unterschiedliche Lichtabsorptionscharakteristika aufweisen, je nach dem welchen pH-Wert sie haben. Daher transmittiert eine mit UV-Licht bestrahlte Flüssigkeit je nach pH-Wert einen unterschiedlichen Intensitätsanteil des ultravioletten Lichts, so dass durch Zuordnung des Messergebnisses zu einer zuvor bekannten Absorptionscharakteristik der Flüssigkeit bei einem bestimmten pH-Wert der tatsächliche pH-Wert der Flüssigkeit ermittelt werden kann.

Das Verfahren kann durch optische Vorrichtungen durchgeführt werden und hat den Vorteil, dass keine Sonden in die zu vermessende wässrige Flüssigkeit eingetaucht werden müssen; das Verfahren kann demnach kontaktfrei durchgeführt werden. Zusätzlich hat es den Vorteil, dass Drifteffekte aufgrund einer Verschlechterung der bisher eingesetzten Sonden durch Korrosion oder Verunreinigung keine Rolle mehr spielen.

Daher kann durch das Verfahren zuverlässig der pH-Wert einer wässrigen Flüssigkeit, insbesondere einer wässrigen Lösung, ermittelt werden.

Aus dem transmittierten Intensitätsanteil des anregenden Lichtes kann vorteilhaft über nachfolgende Gleichung in die optische Absorption umgerechnet werden:

$$T = (1-R) \times \exp(-\alpha \times d)$$

wobei T die optische Transmission, d.h. der transmittierte Intensitätsanteil des anregenden Lichtes, R der Reflektionskoeffizient, d die Schichtdicke der vermessenen Flüssigkeit bzw. der verwendeten Küvette und $\alpha$ die optische Absorption ist.

Referenz-Absorptionscharakteristiken können erzeugt werden, indem von der zu vermessenden wässrigen Flüssigkeit vorzugsweise eine Konzentrationsreihe mehrerer Lösungen hergestellt wird, wobei die Lösungen unterschiedliche bekannte $H_3O^+$-Konzentrationen aufweisen. Dies kann beispielsweise durch Verwenden unterschiedlicher Mengen an KOH und/oder HCl erzielt werden. Dann werden Absorptionsspektren dieser Lösungen erfasst, wobei die jeweilige UV-Absorptionskante je nach pH-Wert, der in der vermessenen Lösung bekannt ist, bei einer unterschiedlichen Wellenlänge liegt. Vergleicht man nun vorteilhaft das Absorptionsspektrum der wässrigen Flüssigkeit, deren pH-Wert zu ermitteln ist, mit einer Reihe von Referenz-Absorptionsspektren, kann anhand der UV-Absorptionskante vorteilhaft einfach und schnell der pH-Wert der vermessenen wässrigen Flüssigkeit ermittelt werden.

Vorzugsweise wird ein Absorptionsspektrum erzeugt. In einem Absorptionsspektrum wird die absorbierte Intensität des anregenden Lichts über einen größeren Wellenlängenbereich vorzugsweise in Abhängigkeit der Wellenlänge des anregenden Lichts gesetzt. Dabei entstehen durch Absorption je nach betrachtetem Wellenlängenbereich für jeden Stoff charakteristische Absorptionskanten und Absorptions-Peaks. Aus der exakten Lage der UV-Absorptionskante und gegebenenfalls von Absorptions-Peaks kann dann direkt auf den pH-Wert der vermessenen Flüssigkeit geschlossen werden, insbesondere dann, wenn die pH-charakteristische Lage der Kante und optional des Peaks bereits bekannt ist.

Es werden elektronische Übergänge in den Flüssigkeitsmolekülen $H_2O$, $OH^-$ und $H_3O^+$ angeregt. Elektronische Übergänge ergeben dabei charakteristische Absorptionskanten, deren energetische Lage Rückschlüsse auf den pH-Wert der Flüssigkeit ermöglicht. Zusätzlich können durch Verwendung von Licht mit einer Wellenlänge, die Schwingungen in den Flüssigkeitsmolekülen $H_2O$, $OH^-$ und $H_3O^+$ anregt, Schwingungs-Absorptionsspektren erzeugt werden, wobei vorzugsweise auch aus der Lage charakteristischer Schwingungs-Peaks auf den pH-Wert der vermessenen Flüssigkeit geschlossen werden kann.

Vorzugsweise werden die Flüssigkeitsmoleküle $H_2O$, $OH^-$ und $H_3O^+$ mit ultraviolettem Licht im Wellenlängenbereich von 100 nm bis 330 nm, insbesondere im Wellenlängenbereich von 180 nm bis 260 nm, angeregt.

Mit dem ultraviolettem Licht werden elektronische Übergänge in den Flüssigkeitsmolekülen $H_2O$, $OH^-$ und $H_3O^+$ angeregt und es entstehen UV-Absorptionskanten, d.h. energetische Bereiche, in denen Elektronen auf energetisch höher gelegene Niveaus in einem Molekülorbital angehoben werden. Es handelt sich dabei um diskrete Energieübergänge, wobei die Energie, die für den Übergang benötigt wird, von der Aufspaltung zwischen einem unbesetzten und einem besetzten Molekülorbital abhängt. Diese Aufspaltung wiederum ist abhängig von dem pH-Wert der zu vermessenden wässrigen Flüssigkeit. Je nach pH-Wert ergibt sich eine charakteristische UV-Absorptionskante bei Verwendung von UV-Licht, die Rückschlüsse auf den pH-Wert der vermessenen wässrigen Flüssigkeit erlaubt.

Zusätzlich können die Flüssigkeitsmoleküle $H_2O$, $OH^-$ und $H_3O^+$ mit Licht im Wellenlängenbereich von sichtbarem und/oder mittlerem Infrarot- und/oder nahem Infrarotlicht, insbesondere im Wellenlängenbereich von 800 nm bis 1200 nm, angeregt werden. In diesem niederenergetischeren Bereich werden Schwingungen in den Flüssigkeitsmolekülen $H_2O$, $OH^-$ und $H_3O^+$ angeregt, die zu charakteristischen Absorptions-Peaks im Spektrum führen. Insbesondere im Wellenlängenbereich von 800 nm bis 1200 nm werden häufig O-H-Streckschwingungen angeregt, deren exakte energetische Position von der Stärke der absorbierenden O-H-Bindung abhängt. Diese wiederum ist abhängig vom Ladungszustand des Kern-Sauerstoff-Atoms und damit auch vom pH-Wert der zu untersuchenden Flüssigkeit. Somit kann vorteilhaft insbesondere bei Verwendung von Licht im Wellenlängenbereich von 800 nm bis 1200 nm aus der Lage der Schwingungs-Absorptions-Peaks auf den pH-Wert der untersuchten wässrigen Flüssigkeit geschlossen werden.

Vorzugsweise werden mehrere Intensitätsanteile des anregenden Lichts in unterschiedlichen vorbestimmten Wellenlängenbereichen getrennt voneinander erfasst. Besonders bevorzugt wird aus den mehreren getrennt erfassten Intensitätsanteilen ein Intensitätsmuster als Absorptionscharakteristik erstellt.

Dies kann beispielsweise dadurch realisiert werden, dass der transmittierte Intensitätsanteil des anregenden Lichtes mit verschiedenen Detektoren erfasst wird, die vorzugsweise durch unterschiedlich angepasste Bandpassfilter zum Erfassen einer bestimmten Wellenlänge optimiert sind.

Dies ist vorteilhaft, weil Licht unterschiedlicher Wellenlängen unterschiedlich stark durch wässrige Flüssigkeiten absorbiert wird. Entsprechend treten unterschiedliche Intensitätsverluste je nach betrachteter Wellenlänge auf der Detektionsseite auf. Vorzugsweise werden diese je nach Wellenlänge unterschiedlichen Intensitätsanteile getrennt voneinander erfasst, um so eine vorteilhaft besonders genaue Messung der energetischen Lage der Absorption der wässrigen Flüssigkeit zu erreichen.

Besonders vorteilhaft wird dann aus einer Vielzahl von mehreren getrennt erfassten Intensitätsanteilen ein charakteristisches Intensitätsmuster erstellt, das dann mit einem Intensitätsmuster einer Lösung mit bekanntem pH-Wert verglichen wird, um so vorzugsweise besonders genau den pH-Wert der vermessenen wässrigen Flüssigkeit zu ermitteln.

In besonders bevorzugter Ausgestaltung werden die Flüssigkeitsmoleküle $H_2O$, $OH^-$ und $H_3O^+$ mit gepulstem Licht, insbesondere mit A/C-moduliertem Licht, angeregt. So kann besonders vorteilhaft gleich ein Selbsttest der Sensoranordnung implementiert werden, da die auf der Lichtquelle ausgegebene Pulsfrequenz des ausgestrahlten Lichtes vorzugsweise vom Detektor erfasst wird. Ist dies nicht der Fall, kann vorteilhaft besonders einfach geschlossen werden, dass in der Sensoranordnung ein Fehler vorliegt.

Besonders bevorzugt wird die Frequenz des durch die wässrige Flüssigkeit transmittierten Intensitätsanteils des gepulsten Lichtes in mehreren unterschiedlichen vorbestimmten Wellenlängenbereichen getrennt voneinander erfasst. Damit kann vorteilhaft noch besser überprüft werden, ob die Sensoranordnung ordnungsgemäß funktioniert, da bevorzugt sämtliche verwendeten Detektoren das gepulste Licht mit der gleichen Frequenz empfangen.

Vorteilhaft kann zusätzlich noch die Intensität des von der Lichtquelle ausgestrahlten anregenden Lichtes vor Eintritt in die wässrige Flüssigkeit erfasst werden. Dann kann vorzugsweise die auf der Detektorseite erfasste Intensität des transmittierten Lichtes bezüglich der tatsächlichen Ausgangsintensität des Lichtes an der Lichtquelle normiert werden, so dass vorzugsweise Effekte, die bereits an der Lichtquelle auftreten, herausgerechnet werden können.

Bei einem Verfahren zur Überwachung des pH-Wertes einer wässrigen Flüssigkeit wird mehrfach eine oben beschriebene Absorptionscharakteristik der wässrigen Flüssigkeit erzeugt und die spektrale Verschiebung der Absorptionscharakteristik zwischen den einzelnen erfassten Absorptionscharakteristika erfasst.

Vorteilhaft werden die Absorptionscharakteristiken in vorbestimmten Zeitabständen oder kontinuierlich erzeugt, um so vorzugsweise besonders zuverlässige Aussagen über den pH-Wert der untersuchten wässrigen Flüssigkeit zu erhalten.

Dabei werden insbesondere Proben aus der wässrigen Flüssigkeit entnommen oder alternativ die wässrige Flüssigkeit kontinuierlich an einer entsprechenden Sensoranordnung, wie einer Lichtquelle und/oder einem Detektor, vorbeigeführt. So kann vorzugsweise eine chemisch behandelte Flüssigkeit während der chemischen Behandlung kontinuierlich auf ihren pH-Wert überwacht werden.

Bei einem Verfahren zur Gewinnung von Trinkwasser aus einem Treibstoff für Luftfahrzeuge wird zunächst der Treibstoff in einer Brennstoffzelle zu Wasser und weiteren Reaktionsprodukten elektrolysiert und dann das erzeugte Wasser mit Mineralstoffen versetzt. Gleichzeitig mit dem Beifügen von Mineralstoffen oder alternativ in vorbestimmten Abständen wird das Verfahren zur Überwachung des pH-Wertes wie oben beschrieben durchgeführt, um so vorteilhaft den Punkt bestimmen zu können, an dem genügend Mineralstoffe zu dem Wasser zugesetzt sind, um das Wasser als Trinkwasser deklarieren zu können.

Eine Sensoranordnung zur Ermittlung des pH-Werts einer wässrigen Flüssigkeit umfassend die Flüssigkeitsmoleküle $H_2O$, $OH^-$ und $H_3O^+$ umfasst:

- eine Lichtquelle zum Bestrahlen der wässrigen Flüssigkeit mit ultraviolettem Licht zur Anregung von elektronischen Übergängen in den Flüssigkeitsmolekülen $H_2O$, $OH^-$ und $H_3O^+$ der wässrigen Flüssigkeit,
- eine Trägereinrichtung zum Positionieren der wässrigen Flüssigkeit im Strahlengang des ultravioletten Lichts,
- eine Detektoreinrichtung zum Erfassen des durch die wässrige Flüssigkeit transmittierten Intensitätsanteils des ultravioletten Lichts;
- eine Umwandlungseinrichtung zum Erzeugen einer Wellenlängen-Intensitäts-Absorptionscharakteristik aus dem erfassten Intensitätsanteil, die die im Wellenlängenbereich von 100 bis 300 nm liegende, durch die Anregung von elektronischen Übergängen in den Flüssigkeitsmolekülen $H_2O$, $OH^-$ und $H_3O^+$ der wässrigen Flüssigkeit hervorgerufene UV-Absorptionskante umfasst,
- eine Einrichtung zum Zuordnen der erzeugten Absorptionscharakteristik zu einer einem bestimmten pH-Wert der wässrigen Flüssigkeit zugehörenden Referenz-Absorptionscharakteristik gemäß der Position der UV-Absorptionskante (14)

Mit einer solchen Sensoranordnung kann berührungsfrei der pH-Wert der zu untersuchenden wässrigen Flüssigkeit bestimmt werden und somit eine Verunreinigung der wässrigen Flüssigkeit bzw. eine Verschlechterung der Sensoranordnung durch Kontamination und/oder Korrosion vermieden werden.

Vorzugsweise ist die Lichtquelle durch eine LED gebildet, deren ausgestrahltes Licht insbesondere einen Emissions-Peak im Wellenlängenbereich von 255 nm bis 270 nm und eine spektrale Breite von 40 nm bis 60 nm aufweist. Damit strahlt die LED vorteilhaft Licht im ultravioletten Wellenlängenbereich aus und regt so vorzugsweise elektronische Übergänge in den Flüssigkeitsmolekülen $H_2O$, $OH^-$ und $H_3O^+$ an. Es kann so als Absorptionscharakteristik beispielhaft ein Absorptionsspektrum im Bereich von 255 nm bis 270 nm erzeugt werden, wobei die Absorptionskante charakteristisch ist für den pH-Wert der wässrigen Flüssigkeit.

Alternativ oder zusätzlich können auch LEDs verwendet werden, die Licht im Wellenlängenbereich von sichtbarem (VIS), nahem Infrarot (NIR)- oder mittlerem Infrarotlicht (MIR) ausstrahlen.

Besonders bevorzugt ist die Lichtquelle zum Ausstrahlen von gepulstem Licht, insbesondere von A/C-moduliertem Licht ausgebildet. So kann vorteilhaft eine Selbsttesteinrichtung implementiert werden, da die Detektoreinrichtung vorzugsweise dieselbe Pulsfrequenz erfasst, wie die Lichtquelle ausstrahlt. Ist dies nicht der Fall, ist vorteilhaft einfach zu erkennen, dass die Sensoranordnung an irgendeiner Stelle nicht funktioniert.

Vorteilhaft weist die Trägereinrichtung eine Leitungseinrichtung zum Vorbeileiten der wässrigen Flüssigkeit an der Lichtquelle und/oder der Detektoreinrichtung auf. So kann die wässrige Flüssigkeit auch vorteilhaft im Durchfluss bezüglich ihres pH-Wertes untersucht werden.

Besonders bevorzugt weist die Trägereinrichtung einen für das anregende Licht optisch transparenten Bereich auf, der insbesondere durch Saphir- oder Quarzfenster gebildet ist.

Weiter bevorzugt ist eine Temperiereinrichtung zum Temperieren der wässrigen Flüssigkeit und zusätzlich oder alternativ eine Temperaturmesseinrichtung zum Messen der Temperatur der wässrigen Flüssigkeit vor Bestrahlung der wässrigen Flüssigkeit durch die Lichtquelle vorgesehen. Da der pH-Wert auch temperaturabhängig ist, ist es vorteilhaft, wenn die Temperatur der zu vermessenden wässrigen Flüssigkeit zumindest bekannt ist. Besonders vorteilhaft ist es, wenn die wässrige Flüssigkeit auf eine vorbestimmte Temperatur eingestellt werden kann, um so einen Vergleich mit bekannten Absorptionscharakteristika vorzugsweise noch weiter zu vereinfachen.

Vorteilhaft weist die Detektoreinrichtung wenigstens einen durch eine Photodiode gebildeten Detektor auf, der vorzugsweise aus Si, SiC, GaN oder ZnO gebildet ist. Aus Halbleitermaterialien gebildete Photodioden haben den Vorteil, dass sie kostengünstig sind und vorzugsweise nur einen geringen Energieverbrauch haben.

In besonders bevorzugter Ausgestaltung weist die Detektoreinrichtung ein Detektorarray auf, das mehrere für die getrennte Erfassung des Intensitätsanteils des anregenden Lichts in mehreren unterschiedlichen Wellenlängenbereichen ausgebildete Detektoren umfasst. Da Licht mit unterschiedlicher Wellenlänge durch eine wässrigen Flüssigkeit unterschiedlich stark absorbiert wird, resultiert eine Anordnung mehrerer Detektoren in einem Detektorarray in einer vorzugsweise verbesserten und genaueren Messung der energieabhängigen Absorption der Flüssigkeitsmoleküle $H_2O$, $OH^-$ und $H_3O^+$.

Vorteilhaft sind die mehreren Detektoren derart aufgebaut, dass sie Photodioden aufweisen, die mit auf unterschiedliche Wellenlängen eingestellten Bandpassfiltern für das Erfassen unterschiedlicher Wellenlängen optimiert sind. Je genauer ein Detektor auf die Wellenlänge optimiert ist, die er erfassen soll, desto genauer wird vorteilhaft auch die Gesamtmessung. Beispielsweise können genaue Intensitätsmuster erstellt werden, die vorzugsweise einen besonders einfachen Abgleich mit bekannten Intensitätsmustern ermöglichen.

In besonders bevorzugter Ausgestaltung ist eine Selbsttesteinrichtung zum Testen der Sensoranordnung auf Funktionalität vorgesehen. So kann vorzugsweise schnell erfasst werden, ob durchgeführte Messungen relevant sind oder nicht.

Die Selbsttesteinrichtung weist vorteilhaft eine Gesamtüberwachungseinrichtung zur gemeinsamen Überwachung aller elektronischen und optischen Bauteile der Sensoranordnung auf. Somit ist es möglich, vorzugsweise schnell zu erfassen, ob eines der Bauteile nicht korrekt funktioniert, um so schnell beispielsweise einen chemischen Aufbereitungsprozess zu stoppen.

Zusätzlich oder alternativ weist die Selbsttesteinrichtung eine Lichtquellenüberwachungseinrichtung zur Überwachung der von der Lichtquelle ausgestrahlten Lichtintensität auf. So kann die mit dem und/oder den Detektoren erfasste Lichtintensität anhand der Ausgangs-Lichtintensität der Lichtquelle vorzugsweise normiert werden, so dass Verschiebungen, die sich bereits aufgrund von Veränderungen an der Lichtquelle selbst ergeben, vorzugsweise herausgerechnet werden können.

Vorteilhaft weist die Gesamtüberwachungseinrichtung eine gepulste Lichtquelle zum Ausstrahlen von die Flüssigkeitsmoleküle $H_2O$, $OH^-$ und $H_3O^+$ anregendem Licht und mehrere Detektoren zum Erfassen der Pulsfrequenz des angeregten Lichts in mehreren unterschiedlichen Wellenlängenbereichen getrennt voneinander auf. Wird Licht von der Lichtquelle gepulst ausgesendet, erfassen bei korrekter Funktionsweise der elektronischen und/oder optischen Bauteile der Sensoranordnung sämtliche Detektoren vorzugsweise die gleiche Pulsfrequenz des ankommenden transmittierten Lichtes. Ist dies nicht der Fall, lässt sich vorzugsweise schnell schließen, dass irgendein Bauteil in der Sensoranordnung nicht korrekt funktioniert.

Vorteilhaft weist die Lichtquellenüberwachungseinrichtung einen in dem Strahlengang des anregenden Lichtes vor Eintritt in die wässrige Flüssigkeit angeordneten Strahlteiler zum Ableiten eines Anteils des anregenden Lichts und einen breitbandigen Referenzdetektor zum Erfassen der Intensität des abgeleiteten Lichts auf.

Somit kann vorzugsweise einfach ein Teil des von der Lichtquelle ausgestrahlten Lichtes bereits vor Kontakt mit der wässrigen Flüssigkeit in einen Referenzdetektor eingeleitet werden, der somit vorteilhaft kontinuierlich die Intensität des ausgestrahlten Lichtes verfolgen kann.

Vorteilhafte Ausgestaltungen der Erfindung sind nachfolgend anhand der beigefügten Zeichnungen näher erläutert. Darin zeigt:

Fig. 1        ein Wasser-Absorptionsspektrum im Wellenlängenbereich zwischen 40 nm und 1mm;

Fig. 2a) bis f)        verschiedene Molekülschwingungstypen des $H_2O$-Moleküls;

Fig. 3        zu den in Fig. 2 gezeigten Schwingungen zugehörige Absorptionsenergien;

Fig. 4        die elektronische Struktur des $H_2O$-Molekülorbitals in energetischer Relation zu den $O_2$- und $H_2$-Atomorbitalen;

Fig. 5        die räumliche Anordnung der Atome und freien Elektronenpaare im $H_2O$-Molekül;

Fig. 6        mehrere Absorptionskanten des Wassers im ultravioletten Bereich gemäß Literaturangaben;

Fig. 7        ein Übersichts-Absorptionsspektrum im ultravioletten Bereich bei verschiedenen pH-Werten der vermessenen wässrigen Flüssigkeit;

Fig. 8        ein Detailausschnitt zwischen 100 nm und 300 nm aus Fig. 7;

Fig. 9        mehrere pH-abhängige Transmissionsspektren von $H_2O$ im Wellenlängenbereich zwischen 180 nm und 260 nm;

Fig. 10a)        eine vereinfachte planare Darstellung der Atome, der bindenden und nicht bindenden Elektronen im $OH^-$-Molekül, im $H_2O$-Molekül und im $H_3O^+$-Molekül;

Fig. 10b)        strukturelle Darstellung des $OH^-$-Moleküls, des $H_2O$-Moleküls und des $H_3O^+$-Moleküls;

Fig. 10c)        eine vereinfachte Darstellung der elektronischen Besetzung der bindenden, nicht bindenden und antibindenden Molekülorbitale aus Fig. 4 für das $OH^-$-, das $H_2O$- und das $H_3O^+$-Molekül;

Fig. 11        eine Charakteristik einer LED mit einem Emissions-Peak im UV-Bereich um 265 nm;

Fig. 12        eine Sensoranordnung zur Ermittlung des pH-Wertes einer wässrigen Flüssigkeit;

Fig. 13        die Sensoranordnung aus Fig. 12 mit dargestelltem Anregungslicht einer ersten Ausführungsform;

Fig. 14        die Sensoranordnung aus Fig. 12 mit dargestelltem Anregungslicht einer zweiten Ausführungsform;

Fig. 15        die Gewinnung von Trinkwasser aus Kerosin;

Fig. 16        eine Glaselektrode zur Messung des pH-Wertes gemäß dem Stand der Technik; und

Fig. 17        ein ionensensitiver Feldeffekttransistor zur Messung des pH-Wertes einer wässrigen Flüssigkeit gemäß dem Stand der Technik.

Der Erfindungsgedanke beruht auf der Erkenntnis, dass die Lichtabsorption einer wässrigen Flüssigkeit 10 pH-abhängig ist. Beispielhaft soll diese Erkenntnis anhand von Wasser 11 als wässrige Flüssigkeit 10 im Folgenden dargestellt werden.

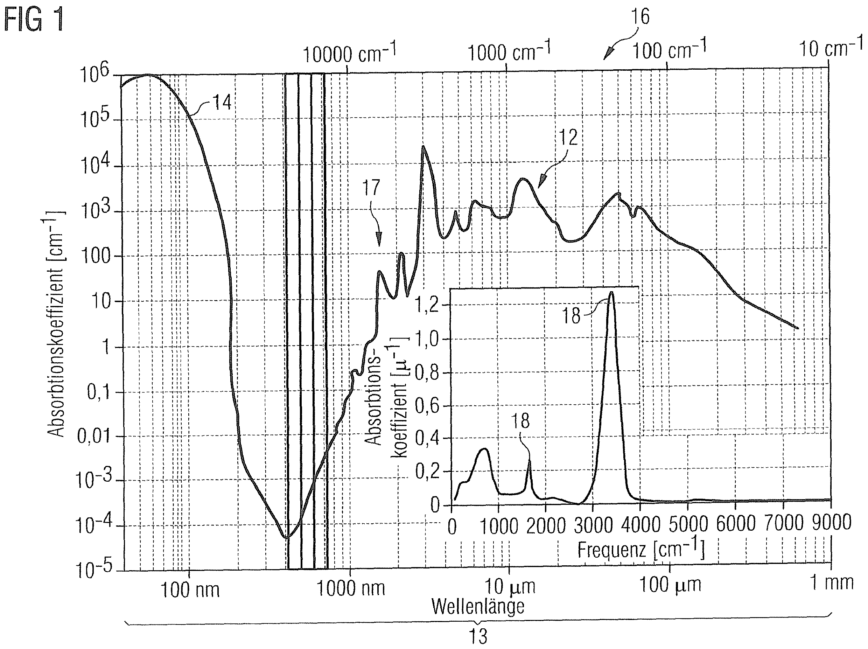

Fig. 1 zeigt ein Absorptionsspektrum 12 in einem Wellenlängenbereich 13 zwischen anregendem fernen ultravioletten Licht 13a und fernem Infrarot-Licht 13a. Im Bereich zwischen 100 nm und 300 nm weist das Absorptionsspektrum 12 eine starke Absorptionskante 14 als Absorptionscharakteristik 16 auf, d.h. hier wird nur ein bestimmter Intensitätsanteil 17 von dem anregenden Licht 13a durch die bestrahlte wässrige Flüssigkeit 10 transmittiert. Absorptions-Peaks 18 im Infrarotbereich sind vergrößert und normiert als Inlay in das Absorptionsspektrum 12 nochmals dargestellt, jedoch abhängig von der Wellenzahl bzw. Frequenz. Es ist zu erkennen, dass Wasser, bedingt durch Schwingungs-Anregung, charakteristische Absorptions-Peaks 18 um 3600 cm$^{-1}$ und 1600 cm$^{-1}$ hat.

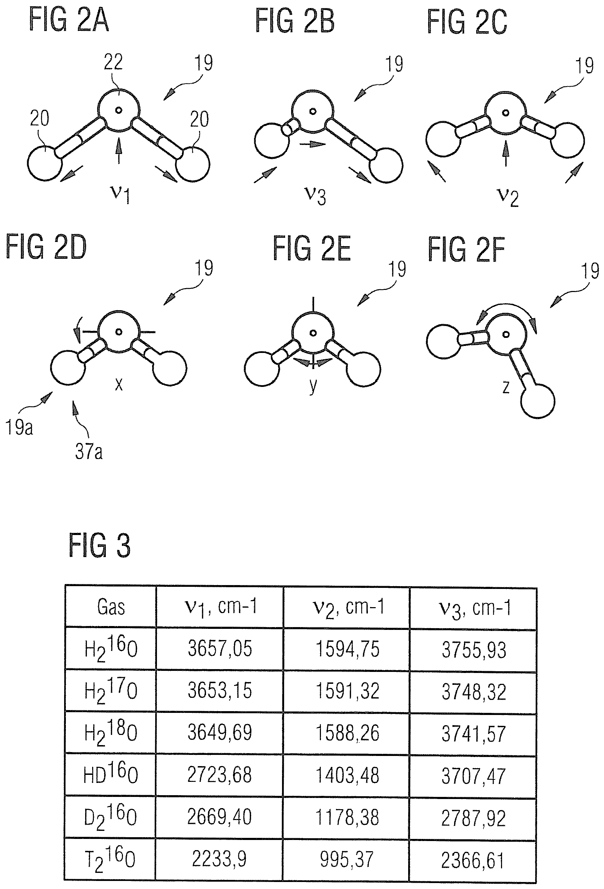

Die Absorptionen im Infrarotbereich resultieren aus der Anregung von Schwingungsmoden, d.h. von Schwingungen 19 des Wasser-Moleküls 19a. Mögliche Schwingungsformen sind in Fig. 2a) bis 2f) dargestellt. Fig. 2a) zeigt dabei eine symmetrische Streckschwingung, wobei sich Wasseratome 20 während der Schwingung 19 symmetrisch von einem Sauerstoffatom 22 weg und auf es zu bewegen. Fig. 2b) zeigt eine asymmetrische Streckschwingung, d.h. während sich ein Wasseratom 20 von dem Sauerstoffatom 22 weg bewegt, bewegt sich das andere Wasseratom 20 auf das Sauerstoffatom 22 zu. Fig. 2c) zeigt eine Deformationsschwingung, wobei sich während der Schwingung 19 der Bindungswinkel der Sauerstoff-Wasserstoff-Bindungen ändert. Fig. 2d) bis f) zeigen Pendelschwingungen um verschiedene Achsen.

In Fig. 3 sind die zu den in Fig. 2a) bis f) gezeigten Schwingungen 19 zugehörigen Absorptionsfrequenzen tabellarisch für unterschiedlich schwere Wasser-Moleküle 19a dargestellt. Aufgelistet sind drei charakteristische Absorptions-Peaks 18 $v_1$, $v_2$ und $v_3$ für Wasser mit unterschiedlichen Zusammensetzungen der Isotope von Wasserstoff und Sauerstoff. Diese Absorptions-Peaks 18 spiegeln sich in dem Absorptionsspektrum 12 im infraroten Bereich in Fig. 1 wieder.

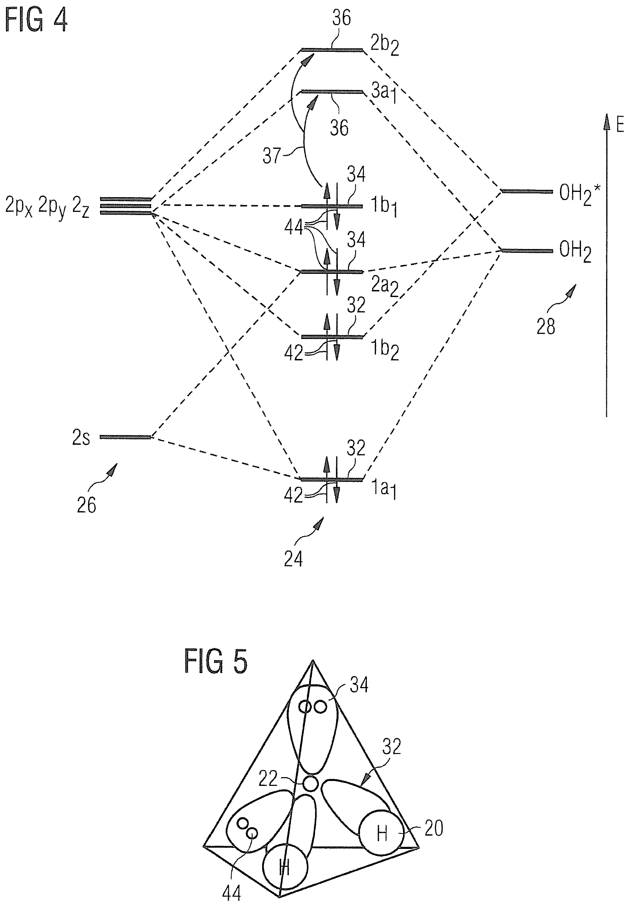

Fig. 4 zeigt die elektronische Struktur bzw. energetische Lage der WasserMolekülorbitale 24 im Verhältnis zu den Sauerstoffatomorbitalen 26 bzw. den Wasserstoffmolekülorbitalen 28. Die mit 1a$_1$ und 1b$_2$ bezeichneten Wassermolekülorbitale 24 sind bindende Molekülorbitale 32, die mit 2a$_1$ und 1b$_1$ bezeichneten Wassermolekülorbitale 24 sind nicht-bindende Molekülorbitale 34 und die mit 3a$_1$ und 2b$_2$ bezeichneten Wassermolekülorbitale 24 sind anti-bindende Molekülorbitale 36.

Fig. 5 zeigt eine räumliche Darstellung des Wassermoleküls 19a sowie der bindenden Molekülorbitale 32 und der nicht-bindenden Molekülorbitale 34.

Bei Anregung mit Licht 13a einer passenden Wellenlänge können Elektronen beispielsweise aus dem nicht-bindenden Molekülorbital 34, bezeichnet mit 1b$_1$ in Fig. 4, in eines der anti-bindenden Molekülorbitale 36 angeregt werden. Energetische Anregung von Elektronen führt zu elektronischen Übergängen 37 in höher gelegene Molekülorbitale und findet zumeist im ultravioletten Bereich statt. Der Vorgang ist so schnell, dass die Anregung nur eine vernachlässigbare Auswirkung auf den Kernabstand der in dem Molekül vorhandenen Atome hat, was auch als Franck-Condon-Prinzip bekannt ist.

Fig. 1 bis Fig. 5 stellen daher graphisch die theoretischen Grundlagen zur energetischen Anregung von Flüssigkeitsmolekülen 37a am Beispiel von Wasser 11 mit $H_2O$, $OH^-$ und $H_3O^+$ im infraroten Bereich und im ultravioletten Bereich dar.

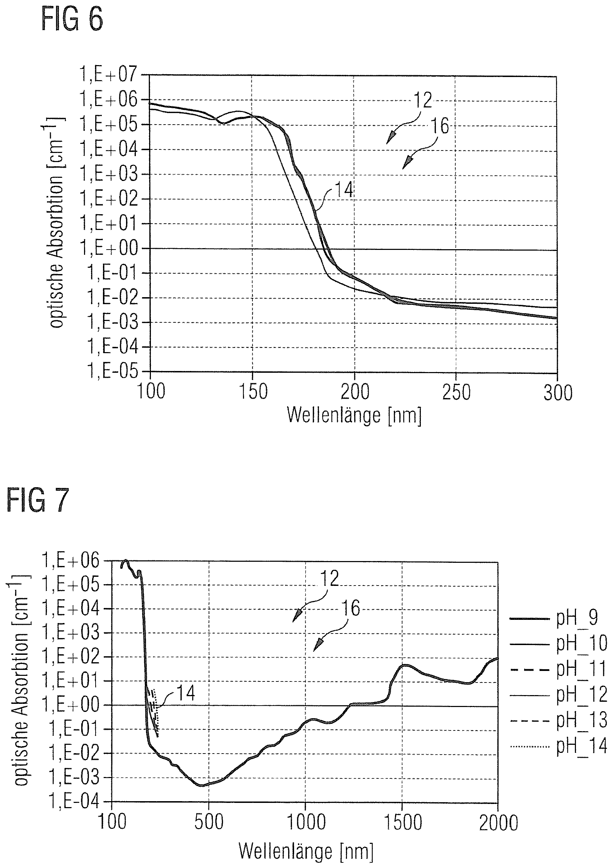

Fig. 6 bis Fig. 9 zeigen konkrete Absorptionsspektren 12 bzw. Transmissionsspektren 38 des Wassers 11 im ultravioletten Bereich.

Fig. 6 zeigt dabei verschiedene Literaturspektren 40 von Wasser 11 im ultravioletten Wellenlängenbereich 13 zwischen 100 nm und 300 nm, wobei deutlich die Absorptionskante 14 im Bereich um 175 nm zu erkennen ist. Wie bereits oben erwähnt, beruht der Erfindungsgedanke auf der Erkenntnis, dass Absorptionsspektren 12 bzw. im konkreten Fall die Absorptionskante 14 des Wassers 11 im ultravioletten Bereich pH-abhängig ist. Die Abweichung der in Fig. 6 gezeigten Literaturspektren 40 könnte dadurch erklärt werden, dass diese Literaturspektren 40 unbewusst bei verschiedenen pH-Werten des Wassers 11 gemessen worden sind.

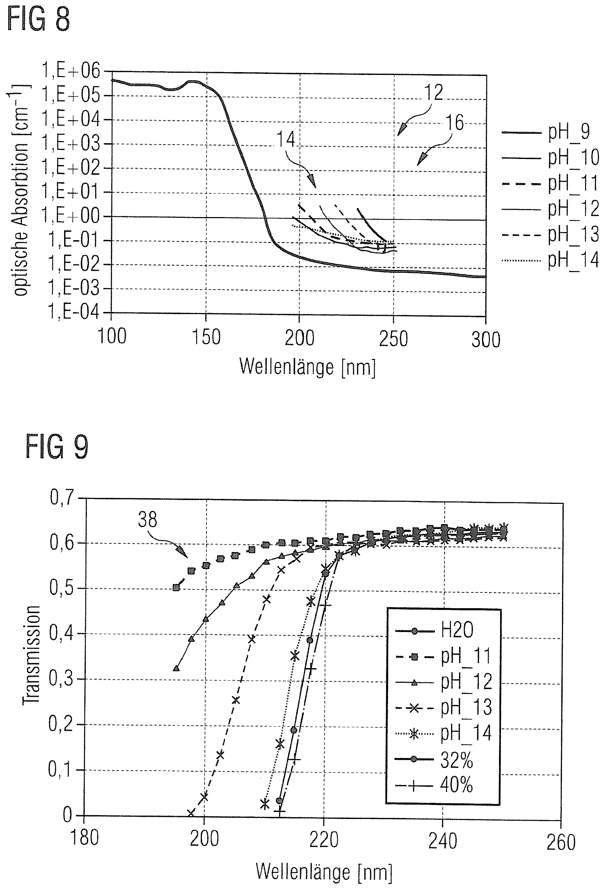

Fig. 7 zeigt ein Übersichts-Absorptionsspektrum 12 von Wasser 11 bei verschiedenen pH-Werten von pH=9 bis pH=14 im Wellenlängenbereich 13 zwischen 0 nm und 2000 nm. Zum besseren Sichtbarmachen der Effekte ist der Bereich zwischen 100 nm und 300 nm in Fig. 8 vergrößert dargestellt. Das vollständige Spektrum zwischen 100 nm und 300 nm ist ein Literaturspektrum 40. Bei den Spektren zwischen 180 nm und 250 nm handelt es sich um pH-abhängig vermessene Absorptionsspektren 12. Es ist zu erkennen, dass die Absorptionskante 14 des Wassers bei pH=14 am weitesten bathochrom zu niedrigeren Energien verschoben ist. Je niedriger der pH-Wert der jeweils vermessenen wässrigen Flüssigkeit 10, in diesem Fall des Wassers 11, wird, desto weiter verschiebt sich die Absorptionskante 14 zu höherenergetischen Wellenlängen und damit hypsochrom.

Fig. 9 zeigt die Transmissionsspektren 38 für die pH-Werte 11 bis 14. Die unterschiedlichen pH-Werte des Wassers 11 wurden durch Zugabe von KOH eingestellt, die optische Schichtdicke betrug bei den Messungen 1 cm. Es ist zu erkennen, dass die Absorptionskante 14 in den Transmissionsspektren 38 sich auch noch über pH=14 weiter bathochrom verschiebt, wenn zusätzlich KOH zugegeben wird, was durch die Prozentangaben 32% und 40% verdeutlicht wird.

Die bathochrome Verschiebung der Wasser-Absorptionskante 14 bei zunehmendem pH-Wert könnte wie folgt erklärt werden.

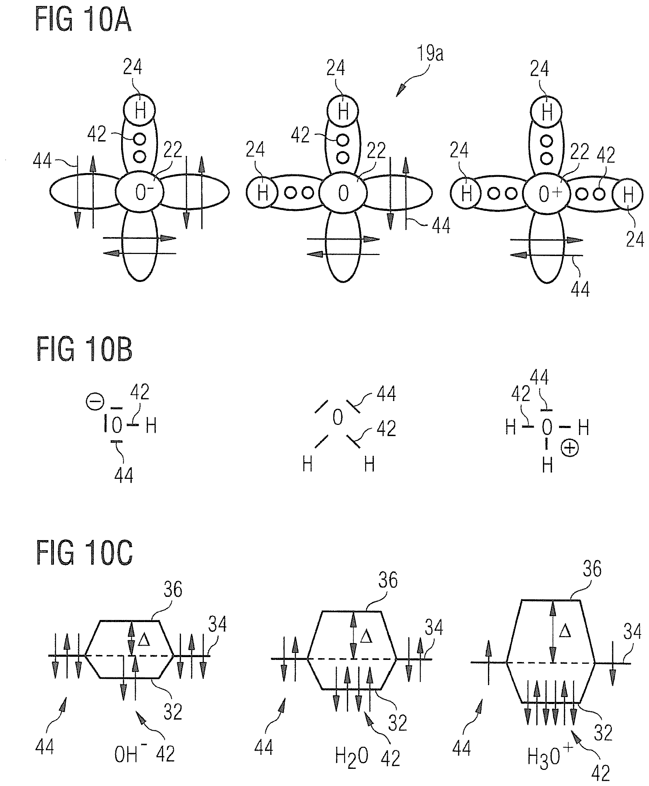

In Fig. 10a) ist vereinfacht eine planare Darstellung des $OH^-$-, des $H_2O$- und des $H_3O^+$-Moleküls dargestellt, wobei bindende Elektronen 42 als Punkte dargestellt sind und nicht-bindende Elektronen 44 als Pfeile. Verdeutlicht wird diese Darstellung auch durch die Strukturdarstellungen in Fig. 10b). Es ist zu erkennen, dass das $OH^-$-Molekül sechs nicht-bindende Elektronen 44 und zwei bindende Elektronen 42 aufweist. Zum $H_3O^+$-Molekül hin werden die nicht-bindenden Elektronen 44 weniger, sind beim $H_2O$-Molekül nur noch vier und beim $H_3O^+$-Molekül nur noch zwei, während die Anzahl der bindenden Elektronen 42 größer wird, nämlich vier beim $H_2O$-Molekül und sechs beim $H_3O^+$-Molekül.

Die Besetzung der nicht-bindenden Molekülorbitale 34 und bindenden Molekülorbitale 32 der drei Moleküle ist in Fig. 10c) nochmals vereinfacht dargestellt. Der unbesetzte Bereich stellt jeweils ein anti-bindendes Molekülorbital 36 dar.

Wie bereits zuvor beschrieben, werden durch UV-Licht 13a elektronische Übergänge 37 von nicht-bindenden Molekülorbitalen 34 in anti-bindende Molekülorbitale 36 angeregt. Je mehr nicht-bindende Elektronen 44 in den nicht-bindenden Molekülorbitalen 34 für einen solchen Absorptions-Übergang zur Verfügung stehen, desto größer ist die energetische Aufspaltung $\Delta$, d.h. der energetische Abstand zwischen den nicht bindenden Molekülorbitalen 34 und den anti-bindenden Molekülorbitalen 36. Je größer die Aufspaltung $\Delta$ ist, desto mehr Energie ist nötig, um ein nicht-bindendes Elektron 44 in ein unbesetztes anti-bindendes Molekülorbital 36 durch Anregung mit Licht 13a anzuheben. Das heißt weiter, dass im Falle des $OH^-$-Moleküls und somit in einem Bereich mit höherem pH-Wert weniger Energie benötigt wird, um ein Elektron in einen unbesetzten Zustand anzuheben. Somit reicht hier Licht 13a mit geringerer Energie und somit mit größeren Wellenlängen für die Absorption aus, so dass sich die Absorptionskante 14 bathochrom verschiebt.

In der Reihe zu $H_3O^+$ vergrößert sich die energetische Aufspaltung $\Delta$ zwischen nicht-bindenden Molekülorbitalen 34 und anti-bindenden Molekülorbitalen 36, so dass auch immer höhere Energien nötig werden, um einen elektronischen Übergang 37 zu ermöglichen. Dies hat zur Folge, dass sich die Absorptionskante 14 zu höheren Lichtenergien und damit zu niedrigeren Wellenlängen hypsochrom verschiebt.

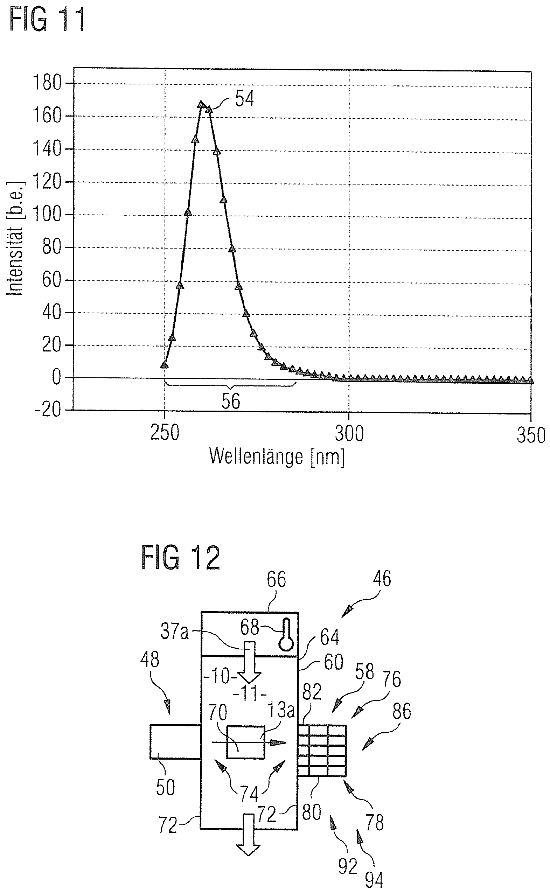

Fig. 11 bis Fig. 14 zeigen, wie der oben beschriebene beobachtete Effekt in einer Sensoranordnung 46 zur Ermittlung des pH-Wertes einer wässrigen Flüssigkeit 10 realisiert werden kann.

Fig. 11 zeigt dabei eine Intensitätscharakteristik einer LED 48, die als Lichtquelle 50 zum Anregen von Flüssigkeitsmolekülen 37a $H_2O$, $OH^-$ und $H_3O^+$ in der wässrigen Flüssigkeit 10 verwendet werden kann. Die dargestellte Lichtquelle 50 hat einen Emissions-Peak 54 bei etwa 265 nm und eine spektrale Breite 56 von etwa 50 nm.

Diese Lichtquelle 50 kann als Anregungs-Lichtquelle in einer in Fig. 12 bis Fig. 14 gezeigten Sensoranordnung 46 verwendet werden.

Fig. 12 zeigt die Sensoranordnung 46 mit der Lichtquelle 50 und einer Detektoreinrichtung 58, zwischen denen in einer Trägereinrichtung 60 die zu vermessende wässrigen Flüssigkeit 10, hier Wasser 11, angeordnet ist.

Die Trägereinrichtung 60 ist im vorliegenden Beispiel als Leitungseinrichtung 64 ausgebildet, die das Wasser 11 an der Lichtquelle 50 und der Detektoreinrichtung 58 vorbeileitet, so dass eine Messung auch von fließendem Wasser 11 möglich ist.

Vorgeschaltet zu der Trägereinrichtung 60 ist eine Temperiereinrichtung 66 mit Temperaturmesseinrichtung 68, wo das Wasser 62 auf eine vorbestimmte Temperatur temperiert wird und diese Temperatur über die Temperaturmesseinrichtung 68 kontrolliert wird.

Die Leitungseinrichtung 64 ist in dem Strahlengang 70 des anregenden Lichtes 13a angeordnet. Damit das Licht 13a durch die Wände 72 der Leitungseinrichtung 64 dringen kann, um so die Flüssigkeitsmoleküle 37a $H_2O$, $OH^-$ und $H_3O^+$ anzuregen, weist die Leitungseinrichtung 64 im Bereich des Strahlengangs 70 einen optisch transparenten Bereich 74 auf, der beispielsweise durch Saphirfenster oder Quarzfenster) gebildet sein kann.

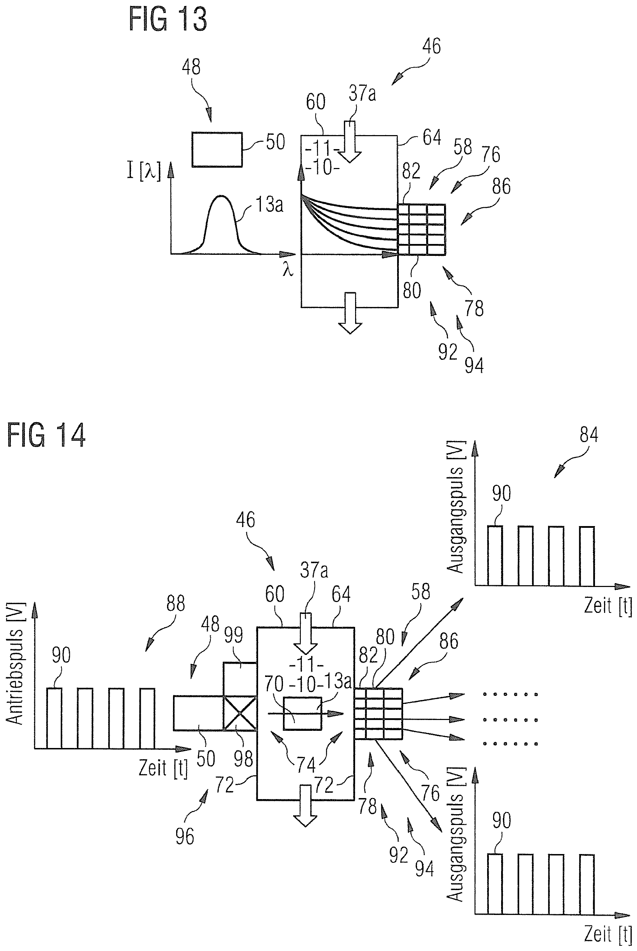

Die Detektoreinrichtung 58 weist mehrere Detektoren 76 auf, die gemeinsam ein Detektorarray 78 bilden. Jeder Detektor 76 ist durch eine Photodiode 80 gebildet, die über einen Bandpassfilter 82 energetisch so optimiert ist, dass sie nur Licht einer bestimmten Wellenlänge bzw. eines engen Wellenlängenbereiches 13 detektiert. Denn, wie in Fig. 13 dargestellt, Licht 13a mit unterschiedlicher Wellenlänge hat in der wässrigen Flüssigkeit 10 einen unterschiedlichen Intensitätsverlauf, d.h. über den Weg, den das Licht 13a durch die wässrige Flüssigkeit 10 nimmt, wird Licht 13a unterschiedlicher Wellenlängen unterschiedlich stark absorbiert. Werden nun durch die energetisch optimierten Photodioden 80 unterschiedliche Wellenlängenbereiche 13 erfasst, kann ein charakteristisches Intensitätsmuster 84 erzeugt werden und so die Messung noch genauer werden. Das Intensitätsmuster 84 wird durch eine Umwandlungseinrichtung 86 erzeugt, die der Detektoreinrichtung 58 nachgeschaltet ist.

In der in Fig. 13 gezeigten ersten Ausführungsform der Sensoranordnung 46 wird eine Lichtquelle 50 verwendet, die kontinuierlich Licht 13a aussendet. Eine alternative Ausführungsform ist in Fig. 14 dargestellt. Hier wird eine gepulste Lichtquelle 88 verwendet, d.h. es werden in kurzen Zeitabständen einzelne Lichtpulse 90 ausgesendet. Wie in Fig. 14 zu sehen, empfangen die Photodioden 80 dann ebenfalls gepulstes Licht 13a mit der gleichen Frequenz, d.h. mit den gleichen Zeitabständen, wie die gepulste Lichtquelle 88 die Lichtpulse 90 aussendet. Ist dies nicht der Fall, weist dies auf eine Fehlfunktion in der gesamten Sensoranordnung 46 hin. Das heißt durch die Verwendung der gepulsten Lichtquelle 88 wird automatisch eine Selbsttesteinrichtung 92 in Form einer Gesamtüberwachungseinrichtung 94 implementiert. Es kann so schnell ermittelt werden, ob an irgendeiner Stelle, d.h. an irgendeinem elektronischen oder optischen Bauteil der Sensoranordnung 46, ein Fehler vorliegt.

Zusätzlich weist die in Fig. 14 gezeigte Ausführungsform der Sensoranordnung 46 eine Lichtquellenüberwachungseinrichtung 96 als Selbsttesteinrichtung 92 auf. Vor Kontakt des anregenden Lichtes 13a mit der wässrigen Flüssigkeit 10 bzw. mit dem optisch transparenten Bereich 74 der Leitungseinrichtung 64 ist in den Strahlengang 70 des anregenden Lichtes 13a ein Strahlteiler 98 eingefügt, der einen Teil des anregenden Lichtes 13a senkrecht auf einen Referenzdetektor 99 ableitet. Über diesen Referenzdetektor 99 kann damit die Intensität des von der Lichtquelle 50 ausgestrahlten Lichtes 13a vor Kontakt mit der wässrigen Flüssigkeit 10 überwacht werden und durch nachfolgende Normierung der von den Photodioden 80 empfangenden Absorptionsspektren 12 Verschiebungen herausgerechnet werden, die durch Änderungen der Lichtintensität direkt an der Lichtquelle 50 begründet sind.

Fig. 15 zeigt die Gewinnung von Trinkwasser 100 durch Elektrolyse von Kerosin 102 in einer Brennstoffzelle 104. In der Brennstoffzelle 104 wird aus dem Kerosin 102 oder einem anderen geeigneten Treibstoff 106 Energie gewonnen, wobei als Reaktionsprodukt 108 Wasser 11 anfällt. Nach Ausleiten aus der Brennstoffzelle 104 wird das erzeugte Wasser 11 mit Mineralstoffen 110 versetzt. Nachgeschaltet zu dieser chemischen Aufbereitung ist die Sensoranordnung 46. Hier wird anhand des pH-Wertes des Wassers 11 überprüft, ob in dem aufbereiteten Wasser 11 bereits genügend Mineralstoffe 110 vorhanden sind, um es als Trinkwasser 100 deklarieren zu können. Ist dies nicht der Fall, kann die Zufuhr von Mineralstoffen 110 über eine Reguliereinrichtung 112 vergrößert werden.

Die elektrochemische Messung von pH-Werten ist eine gängige Technologie. Das elektrochemische Messprinzip benötigt Elektroden, die in Kontakt mit dem zu vermessenden flüssigen Elektrolyten gebracht werden müssen. Kontaktkorrosion und/oder Verunreinigung kann bewirken, dass die von dem Sensor gemessenen Signale driften, obwohl sich der pH-Wert nicht verändert hat. Im Stand der Technik bekannte Sensoren benötigen daher eine regelmäßige Rekalibration, um zuverlässige Messergebnisse zu erzielen.

Die Messung des pH-Wertes kann auf die Messung einer elektrischen Spannung durch beispielsweise eine ionenselektiven Elektrode (ion-selective electrode, ISE), normalerweise eine Glaselektrode 200, oder durch Verwendung eines ionensensitiven Feldeffekttransistors (ion-sensitive field effect transistor, ISFET) 201 reduziert werden. Allen elektrochemischen pH-Messgeräten ist gemeinsam, dass sie regelmäßige Rekalibrationen benötigen, um zuverlässige und reproduzierbare Messungen des pH-Wertes zu erzielen. Solche Rekalibrationsverfahren benötigen Referenzlösungen und geschultes Personal, um ausgeführt werden zu können. Rekalibrationsverfahren können jedoch nicht ausgeführt werden, wenn der pH-Wert, der zu messen ist, sich in einem unerwarteten Messbereich des Routinemessverfahrens befindet.

Die Erfindung basiert auf der Beobachtung, dass die UV-Transparenz von reinem Wasser 11 verringert ist, wenn Chemikalien zu dem Wasser 11 zugegeben werden, die den pH-Wert des Wassers 11 vergrößern. Diese Beobachtung erlaubt es, optische pH-Sensoren zu konstruieren, die keine Elektroden benötigen, welche in Kontakt mit dem flüssigen Elektrolyten sind. Auf diese Weise können zwei Hauptvorteile erzielt werden:

1. Alle Arten von Drifteffekten, die durch Verunreinigung und/oder Korrosion der Elektrode begründet sind, können eliminiert werden;

2. Wird der Sensor mit A/C-moduliertem UV-Licht betrieben, kann eine Selbsttesteinrichtung 92 implementiert werden, die in den derzeit verwendeten pH-Sensordesigns nicht vorhanden ist.

Eine derartige Sensoranordnung 46 kann folgendermaßen verwendet werden:

Brennstoffzellen 104, die mit Kerosin 102 betrieben werden, erzeugen gleichzeitig Elektrizität, deoxygenierte Luft und Wasser 11. Um dieses Wasser 11 aus der Brennstoffzelle 104 trinkbar zu machen, muss es mineralisiert werden. Die vorgeschlagene pH-Sensoranordnung 46 kann verwendet werden, um diesen Mineralisationsvorgang zu überwachen. Die Sensoranordnung 46 hat im Vergleich zu kommerziellen Designs die folgenden Vorteile:

- es sind keine Pufferlösungen oder Kalibrationen nötig;
- anlagenbedingt kann sich das Sensorsystem bzw. die Sensoranordnung 46 selbst testen;
- die Wartung von A/C-Licht resultiert in geringeren Kosten; und
- es besteht eine höhere A/C-Nutzbarkeit.

Im Stand der Technik sind elektrochemische Messmethoden zur Messung des pH-Wertes bekannt. Aus verschiedenen Gründen sind zuverlässige Messungen der Wasserstoff-Ionen-Konzentration in wässrigen Lösungen nötig. Wichtiger sogar als die $H^+$-Konzentration selbst ist in der Praxis der pH-Wert, der folgendermaßen mit der $H^+$-Konzentration zusammenhängt:

$$pH = -\log_{10}(H^+).$$

Die Messung des pH-Wertes kann auf die Messung einer elektrischen Spannung durch Verwendung beispielsweise einer ionenselektiven Elektrode ISE, normalerweise einer Glaselektrode 200 oder durch Verwendung eines ionensensitiven Feldeffekttransistors ISFET 201 reduziert werden. Beispiele einer ionenselektiven Elektrode vom Typ einer Glaselektrode 200 und eines ISFETs 201 sind in den Fig. 16 (Glaselektrode 200) und Fig. 17 (ISFET 201) dargestellt. Mit beiden Messanordnungen kann der pH-Wert in wässrigen Lösungen gemessen werden.

Beiden Messprinzipien gemeinsam ist, dass die Elektroden in das flüssige Medium eingetaucht werden müssen, um dieses zu überwachen. Allen elektrochemischen pH-Messvorrichtungen ist gemeinsam, dass sie häufige regelmäßige Rekalibrationen benötigen, um zuverlässige und reproduzierbare Messungen des pH-Wertes zu erzielen. Solche Rekalibrationsverfahren benötigen Referenzlösungen und geschultes Personal, um ausgeführt werden zu können. Solche Rekalibrationsverfahren können jedoch nicht ausgeführt werden, wenn sich der pH-Wert, der gemessen werden soll, in einem unerwarteten Bereich eines Routine-Messverfahrens befindet.

Um diese Probleme auf praktische Weise lösen zu können, wird ein neuer Weg beschrieben, den pH-Wert zu messen, ohne dass Elektrochemie und sich verschlechternde Elektroden verwendet werden. Wie nachfolgend beschrieben, basiert dieses neue Verfahren auf der Beobachtung, dass flüssiges Wasser 11 eine pH-abhängige Absorption im UV-Bereich aufweist.

Die optische Absorption von Wasser 11 ist bereits bekannt. Fig. 1 zeigt das optische Absorptionsspektrum 12 von Wasser 11 über einen großen Wellenlängenbereich 13. Wasser 11 ist in dem sichtbaren Bereich des Spektrums fast vollständig transparent. Eine minimale Absorption tritt in dem Bereich von sichtbarem (visible, VIS) blauem Licht auf. Bei dieser Wellenlänge ist die Eindringtiefe des Lichtes 13a in pures Wasser 11 in der Größenordnung von $10^4$ cm bis 100 m. Bei kürzeren und längeren Wellenlängen vergrößert sich die optische Absorption um mehrere Größenordnungen. Bei fernem Infrarotlicht (FIR; $\lambda > 10~\mu m$) wird die optische Absorption durch molekulare Rotationen der Wassermoleküle 19a dominiert. Im Bereich von mittlerem und nahem Infrarotlicht (MIR und NIR) des Spektrums ist die optische Absorption durch molekulare Schwingungen 19, wie in Fig. 2a) bis 2f) gezeigt, dominiert. Ein prominenter Absorptions-Peak 18 tritt um 3700 cm$^{-1}$ auf, was etwa 3 $\mu m$ Wellenlänge entspricht. Bei dieser Wellenlänge ist die optische Eindringtiefe nur in der Größenordnung von 1 $\mu m$. Diese starke MIR-Absorption ist in der Anregung von symmetrischen und asymmetrischen Schwingungen 19 der O-H-Bindung begründet, wie in Fig. 2a) und Fig. 2b) gezeigt. Oberschwingungsabsorptionen dieser Schwingungen 19 treten bei nachfolgend kürzeren NIR-Wellenlängen auf und erstrecken sich weit in den sichtbaren Bereich des optischen Spektrums. Die in Fig. 2a) bis 2f) gezeigten symmetrischen, asymmetrischen Streck-, Pendel- und Deformationsschwingungen des $H_2O$-Moleküls haben optische Absorptionen bei Wellenlängen zur Folge, die größer sind als ungefähr 400 nm, wie in Fig. 3 dargestellt.

Der Teil des in Fig. 1 dargestellten optischen Spektrums des Wassers 11, der für die Messung des pH-Wertes am relevantesten ist, ist der kurzwellige Ast, der im sichtbaren blauen Bereich des Spektrums beginnt und sich bis in den Bereich des fernen ultravioletten Lichtes (FUV) erstreckt. Wie aus Fig. 1 hervorgeht, vergrößert sich die optische Absorption um acht Größenordnungen bei Verringerung der Wellenlänge von 200 nm zu 100 nm. Diese starke Absorption beruht auf elektronischen Übergängen 27 in dem flüssigen Wasser 11. Die elektronische Struktur des $H_2O$-Moleküls und die korrespondierenden Molekülorbitale 32, 34, 36 sind in den Fig. 4 und Fig. 5 gezeigt. Fig. 4 zeigt dabei die elektronische Struktur eines $H_2O$-Moleküls. Fig. 4 zeigt auf der linken Seite ein Sauerstoffatomorbital 26 und auf der rechten Seite zwei Wasserstoffatomorbitale 24, wobei nach oben hin die Energie der Orbitale steigt. In der Mitte ist die elektronische Anordnung der Wassermolekülorbitale 32, 34, 36 dargestellt. Übergänge zwischen besetzten nicht-bindenden Molekülorbitalen 34 und unbesetzten anti-bindenden Molekülorbitalen 36 haben die optische Absorption im UV-Wellenlängenbereich 13 zur Folge.

Fig. 5 zeigt die räumliche Anordnung der Valenzmolekülorbitale eines $H_2O$-Moleküls mit zwei doppelt besetzten nicht-bindenden Sauerstofforbitalen. Durch Punkte sind einsame Elektronenpaare in einem sp$^3$-Hybridorbital eines Sauerstoffes dargestellt, die nicht-gefüllten Orbitale stellen O-H-s-Bindungen zwischen einem Sauerstoff-sp$^3$-Hybridorbital

und einem H 1s-Orbital dar.

Optische Übergänge sind zwischen besetzten und leeren Molekülzuständen möglich. Übergänge sind daher ausgehend von dem Zustand $1b_1$ in die Zustände $3a_1$ oder $2b_2$ möglich. Diese Übergänge verbinden doppelt besetzte, nicht-bindende Sauerstoffatomzustände mit anti-bindenden OH-Molekülzuständen. Es ist bekannt, dass die elektronische Besetzung von nicht-bindenden Zuständen die kovalente chemische Bindung destabilisiert, vgl. beispielsweise M. Stutzmann, Phil. Mag. B56, 63-70, 1987. Damit übereinstimmend ist die Beobachtung, dass UV-Photonen mit etwa 125 nm Wellenlänge $H_2O$-Moleküle 28 zu OH- und H-Radikalen gemäß folgender Gleichung photodissoziieren:

$$(h\nu \sim 125\ nm)\ H_2O \rightarrow OH + H.$$

Die Erfindung basiert auf der grundlegenden Beobachtung, dass die optische Absorption von Wasser 11 pH-abhängig ist.

Bezüglich einer Messung des pH-Wertes war es eine grundlegende Beobachtung, dass die optische UV-Absorption des Wassers 11 pH-abhängig ist. Diese Beobachtung wurde von der Anmelderin bei Experimenten zum Halbleiter-Ätzen gemacht.

Fig. 9 zeigt die optische Transmission von UV-Licht durch Wasser 11 bei einer Schichtdicke von 1 cm, wobei eine Reihe von pH-Werten durch Zugabe von ansteigenden Mengen an KOH eingestellt worden ist.

Die Daten aus Fig. 9 können mit der folgenden Gleichung zu Werten der optischen Absorption umgerechnet werden:

$$T = (1-R)\ x\ exp(-\alpha\ x\ d),$$

wobei T die optische Transmission, R der Reflektionskoeffizient, d die Dicke der Küvette und $\alpha$ die optische Absorption ist.

Die in Fig. 9 gemessenen Daten können dann mit dem Literaturspektrum 40 in Fig. 1 verglichen werden, wie beispielsweise in Fig. 7 dargestellt.

In Fig. 7 und Fig. 8 ist das optische Absorptionsspektrum von Wasser 11 dargestellt. Dabei handelt es sich bei der dicken Linie um das Literaturspektrum 40. Die anderen Linien stellen pH-abhängige Messungen dar. Fig. 7 ist dabei ein Übersichtsspektrum und Fig. 8 ein Teilspektrum im ultravioletten Bereich. Das bedeutet, Fig. 7 zeigt ein Übersichtsspektrum ähnlich zu Fig. 1, wobei Fig. 8 die UV-Region in größerem Detail zeigt. Die Messungen wurden nur in einem kleinen Teil der UV-Absorptionskante 14 des Wassers 11 durchgeführt, da eine Küvette mit optischer Weglänge von 1 cm verwendet worden ist. Sollen größere Bereiche der optischen Absorptionskante 14 gemessen werden, müssen kleinere oder viel längere optische Weglängen verwendet werden.

Fig. 6 zeigt Literaturspektren 40 des optischen Absorptionsspektrums 12 von Wasser 11, wobei die Literaturwerte in der UV-Region streuen. Die unterschiedliche Positionierung der Absorptionskante 14 könnte darin begründet sein, dass geringfügig unterschiedliche pH-Werte des vermessenen Wassers 11 vorgelegen haben.

Fig. 6 zeigt damit Daten von unterschiedlichen veröffentlichten Quellen, wobei zu sehen ist, dass die Daten nicht ganz übereinstimmen bezüglich der exakten Position der UV-Absorptionskante 14. Betrachtet man diese Beobachtung im Licht der der Erfindung zugrunde liegenden Beobachtungen, könnte dieser Unterschied darin begründet sein, dass die Messungen durchgeführt worden sind, ohne dass sich die Wissenschaftler der pH-Abhängigkeit des optischen Absorptionsspektrums 12 bewusst waren und daher unabsichtlich Wasserproben verwendet haben, die geringfügig unterschiedliche pH-Werte hatten.

Fig. 10 fasst eine mögliche Erklärung des pH-Effektes bei der optischen Absorption zusammen. Fig. 10a) zeigt die drei möglichen Ladungszustände von Wassermolekülen innerhalb von flüssigem Wasser 11. Fig. 10c) zeigt die elektronische Besetzung von nicht-bindenden und anti-bindenden Zuständen in den drei Ladungszuständen von Wasser 11. Bindungselektronen werden durch Punkte dargestellt und nicht-bindende Elektronen durch Pfeile. Fig. 10a) zeigt eine vereinfachte 2D-Version der Valenzmolekülorbitale eines neutralen Wassermoleküls 19a (Mitte) und seiner beiden ionischen Zustände (links und rechts). In Fig. 10c) ist die elektronische Besetzung der bindenden 32 und nicht-bindenden Molekülorbitale 34 der drei unterschiedlichen ionischen Zustände gezeigt. Fig. 10c) zeigt, dass die Besetzung der nicht-bindenden Molekülorbitale 34 in der Reihenfolge $OH^-$, $H_2O$, $H_3O^+$ abnimmt. In $OH^-$-Ionen sind mehr Elektronen für einen optischen Übergang in OH-anti-bindende Molekülorbitale 36 verfügbar als in dem neutralen und positiv geladenen Zustand. Diese unterschiedliche Verfügbarkeit anregbarer Elektronen hat einen Effekt auf die Stärke der optischen Absorption. Es ist sehr wahrscheinlich, dass ein stärkerer Absorptionseffekt darauf basiert, dass unterschiedliche Grade von negativer Ladung an dem Kern-Sauerstoff-Ion vorhanden sind: überschüssige negative Ladung destabilisiert die kovalente Bindung und resultiert in einer verringerten Aufspaltung $\Delta$ der nicht-bindenden Molekülorbitale 34 und anti-bindenden Molekülorbitale 36 in dem $OH^-$-Ionenzustand. Diese Verringerung der Aufspaltung $\Delta$ sorgt qualitativ für die Verschiebung der optischen Absorptionskante 14 zu niedrigeren Energien, also bathochrom. Verfolgt man die Reihe

von $H_2O$ zu $H_3O^+$, wird das Kern-Sauerstoff-Atom immer positiver. Die höhere effektive Kernladung an dem Sauerstoff-Atom sollte in diesem Fall zu stärkeren OH-Bindungen führen und daher eine größere Aufspaltung $\Delta$ zwischen nicht-bindenden Molekülorbitalen 34 und anti-bindenden Molekülorbitalen 36 zur Folge haben. Die UV-Absorptionskante 14 sollte daher zu größeren Photonenergien wandern, wenn der pH-Wert unter pH=7 abgesenkt wird. Diese Erklärung stimmt qualitativ mit den in Fig. 7 bis Fig. 9 gezeigten Beobachtungen überein.

In möglichen praktischen Sensoranwendungen hat die hochenergetische Lage der UV-Absorptionskante 14 im Bereich von 6-7 eV natürliche Grenzen. Denn in diesem Bereich der Photonenenergien gibt es nur eine begrenzte Anzahl optisch transparenter und mechanisch stabiler Fenstermaterialien wie beispielsweise Saphir und Quarz. In diesem Zusammenhang ist es vorteilhaft, wenn zusätzliche Methoden verwendet werden, um optisch den pH-Wert zu erfassen, indem geringere Photonenenergien verwendet werden. Solche Möglichkeiten existieren in dem Bereich von 1000 nm Photonenenergie, wo die optische Absorption durch Oberschwingungen der OH-Streckschwingung dominiert werden. Die exakte spektrale Position der OH-Streckschwingung hängt ebenfalls von der Stärke der absorbierenden OH-Bindung ab. Aus diesem Grund hängt die Stärke der absorbierenden OH-Bindung von dem Ladungszustand des Kern-Sauerstoff-Atoms und damit auch von dem pH-Wert des flüssigen Elektrolyten ab.

Die Erfindung basiert daher auf dem Grundgedanken, dass der pH-Wert optisch überwacht werden kann.

Die Beobachtung einer pH-abhängigen optischen Absorption kann im Bereich der Sensortechnologie eingesetzt werden. Damit kann der pH-Wert einer wässrigen Lösung durch lediglich optische Vorrichtungen durchgeführt werden, d.h. ohne dass Elektroden in den flüssigen Elektrolyten eingetaucht werden.

Eine mögliche Realisierung einer optischen Messung des pH-Wertes ist in Fig. 12 dargestellt, wo eine wassergefüllte optische Absorptionszelle mit einer Lichtquelle 50 in Form einer UV-LED 48 und ein Photodetektor-Array 78 dargestellt sind, wobei jeder Detektor 76 eine unterschiedliche spektrale Antwortcharakteristik hat.

UV-Licht 13a von einer Lichtquelle 50 mit einem relativ breiten Emissionsspektrum wird durch die wässrige Flüssigkeit 10, die zu vermessen ist, transmittiert und nach Durchgang durch das Flüssigkeitsvolumen detektiert. Um eine definierte Bestrahlung zu erhalten, wird beispielsweise eine UV-LED 48 verwendet, die die in Fig. 11 dargestellte Strahlungscharakteristik mit einer Peak-Emission bei einer Wellenlänge von etwa 265 nm und einer spektralen Breite 56 von etwa 50 nm hat.

Die Detektoreinrichtung 58 wird so aufgebaut, dass sie ein Array von Photodioden 80 aufweist, die mit engen Bandpassfiltern 82 ausgestattet sind, wobei jeder Bandpassfilter 82 eine unterschiedliche zentrale Wellenlänge hat. Die Photodetektoren selbst können beispielsweise Silizium-Photodioden 80 oder - Detektoren sein, die aus breitbandigeren Materialien als Silizium, wie beispielsweise SiC, GaN oder ZnO, gebildet sind.

Fig. 13 zeigt die spektrale Charakteristik der UV-Emissionsquelle und die wellenlängenabhängige optische Absorptionscharakteristik 16 innerhalb der wässrigen Flüssigkeit 10. Jede spektrale Komponente wird beim Durchgang des UV-Lichtes 13a durch die wässrige Flüssigkeit 10 mit einer unterschiedlichen Rate gedämpft. Die Silizium-Detektoren 76 sind spektral gefiltert, da die Lichteindringtiefe von der Farbe des Lichtes 13a abhängig ist. Es kann damit eine Intensitätsverteilung an den einzelnen Detektoren 76 abhängig vom pH-Wert erzeugt werden. Das spektral gefilterte Sensor-Array erzeugt daher ein Intensitätsmuster 84, das abhängig ist von der exakten Position der UV-Absorptionskante 14 und damit vom pH-Wert der wässrigen Flüssigkeit 10.

Die optische Bestimmung des pH-Wertes hat den Vorteil, dass Elektroden nicht in möglicherweise aggressive oder korrosive Flüssigkeiten 10 eingetaucht werden müssen. Das Abdriften von Werten aufgrund Veränderungen an der Elektrode oder aufgrund von Korrosionen werden daher bei der vorliegenden Sensoranordnung 46 nicht erwartet.

Weiter hat ein optischer pH-Sensor den Vorteil, dass eine Selbsttesteinrichtung 92 integriert werden kann. Fig. 14 zeigt den grundlegenden Aufbau eines optischen Sensorsystems mit einer implementierten Selbsttesteinrichtung 92.

Als UV-Lichtquelle 50 wird eine A/C-modulierte Lichtquelle 50 mit bekannter Frequenz verwendet. Wenn alle Komponenten der pH-Sensoranordnung 46 korrekt funktionieren, kann diese bekannte Frequenz in jedem einzelnen Photodetektor-Ausgangssignal zu beobachten sein. Das bedeutet, dass, wenn diese Frequenz beobachtet wird, dies ein Beweis dafür ist, dass die gesamte Kette elektrischer und optischer Bauteile der Sensoranordnung 46 korrekt arbeitet. Wie in Fig. 14 zu sehen, zeigen sämtliche spektral gefilterten SI-Detektoren 76 auf einer Zeitachse an der gleichen Position einen Ausgangspuls, was der Frequenz des Antriebspulses der Lichtquelle 50 entspricht.

Eine Verschlechterung der UV-Lichtquelle 50 kann erfasst und somit korrigiert werden, indem ein Strahlteiler 98 und ein breitbandiger Referenzdetektor 99 auf der Emissionsseite der Trägereinrichtung 60, beispielsweise einer Küvette, angeordnet wird.

Mit der Sensoranordnung 46 können Änderungen in dem pH-Wert von wässrigen Lösungen durch Beobachtung von Verschiebung der UV-Absorptionskante 14 erfasst werden. Dazu können verschiedene technische Vorrichtungen zur Erfassung dieser Verschiebung verwendet werden, beispielsweise die Anordnung farbabhängiger Sensoren, wie dem gezeigten Detektorarray 78, oder auch die Verwendung erzeugter Beugungsgitter. Weiter kann eine Sensoranordnung 46 verwendet werden, die Veränderungen in der spektralen Position von OH-Schwingungs-Peaks detektiert, die mit einer Änderung des pH-Wertes der wässrigen Flüssigkeit 10 verbunden sind. Dazu können verschiedene technische Vorrichtungen verwendet werden, die im niederenergetischen Absorptionsbereich, beispielsweise im sichtbaren, nahen IR oder mittleren IR arbeiten.

Zusätzlich kann eine Selbsttesteinrichtung 92, wie in Fig. 14 gezeigt, in die Sensoranordnung 46 implementiert werden. Dazu können die beispielhaft in Fig. 14 dargestellten technischen Vorrichtungen für solche Selbsttests verwendet werden.

**Bezugszeichenliste:**

| | |
|---|---|
| 10 | wässrige Flüssigkeit |
| 11 | Wasser |
| 12 | Absorptionsspektrum |
| 13 | Wellenlängenbereich |
| 13a | Licht |
| 14 | Absorptionskante |
| 16 | Absorptionscharakteristik |
| 17 | Intensitätsanteil |
| 18 | Absorptions-Peak |
| 19 | Schwingung |
| 19a | Wassermolekül |
| 20 | Wasserstoffatom |
| 22 | Sauerstoffatom |
| 24 | Wassermolekülorbital |
| 26 | Sauerstofifatomorbital |
| 28 | Wasserstofif-Molekülorbital |
| 32 | bindendes Molekülorbital |
| 34 | nicht-bindendes Molekülorbital |
| 36 | anti-bindendes Molekülorbital |
| 37 | elektronischer Übergang |
| 37a | Flüssigkeitsmolekül $H_2O$, $OH^-$ und $H_3O^+$ |
| 38 | Transmissionsspektrum |
| 40 | Literaturspektrum |
| 42 | bindendes Elektron |
| 44 | nicht-bindendes Elektron |
| 46 | Sensoranordnung |
| 48 | LED |
| 50 | Lichtquelle |
| 54 | Emissions-Peak |
| 56 | spektrale Breite |
| 58 | Detektoreinrichtung |
| 60 | Trägereinrichtung |
| 64 | Leitungseinrichtung |
| 66 | Temperiereinrichtung |
| 68 | Temperaturmesseinrichtung |
| 70 | Strahlengang |
| 72 | Wand |
| 74 | optisch transparenter Bereich |
| 76 | Detektor |
| 78 | Detektorarray |
| 80 | Photodiode |
| 82 | Bandpassfilter |
| 84 | Intensitätsmuster |
| 86 | Umwandlungseinrichtung |
| 88 | gepulste Lichtquelle |
| 90 | Lichtpuls |
| 92 | Selbsttesteinrichtung |
| 94 | Gesamtüberwachungseinrichtung |
| 96 | Lichtquellenüberwachungseinrichtung |

98 Strahlteiler
99 Referenzdetektor
100 Trinkwasser
102 Kerosin
104 Brennstoffzelle
106 Treibstoff
108 Reaktionsprodukt
110 Mineralstoff
112 Reguliereinrichtung
200 Glaselektrode
201 Feldeffekttransistor
202 Referenzelektrode
204 KCl-Lösung
206 Diaphragma
208 Messelektrode
210 innere Lösung
212 Glasmembran
216 Spannungsquelle
218 Spannungssenke
220 Isolator
222 Wasserstoffionen
224 negative Spannung
Δ Aufspaltung

**Patentansprüche**

1. Verfahren zur Ermittlung des pH-Wertes einer wässrigen Flüssigkeit (10) umfassend die Flüssigkeitsmoleküle (37a) $H_2O$, $OH^-$ und $H_3O^+$ mit den Schritten

   a) Bestrahlen der wässrigen Flüssigkeit (10) mit ultraviolettem Licht (13a) zur Anregung von elektronischen Übergängen (37) in den Flüssigkeitsmolekülen (37a) $H_2O$, $OH^-$ und $H_3O^+$ der wässrigen Flüssigkeit (10);
   b) Erfassen des von der wässrigen Flüssigkeit (10) transmittierten Intensitätsanteils (17) des ultravioletten Lichts (13a) mit einer Detektoreinrichtung (58);
   c) Erzeugen einer Wellenlängen-Intensitäts-Absorptionscharakteristik (16) aus dem erfassten Intensitätsanteil (17), die die im Wellenlängenbereich von 100 bis 300 nm liegende, durch die Anregung von elektronischen Übergängen (37) in den Flüssigkeitsmolekülen (37a) $H_2O$, $OH^-$ und $H_3O^+$ der wässrigen Flüssigkeit (10) hervorgerufene UV-Absorptionskante (14) umfasst; und **gekennzeichnet durch**
   d) Zuordnen der erzeugten Absorptionscharakteristik (16) zu einer einem bestimmten pH-Wert der wässrigen Flüssigkeit (10) zugehörenden Referenz-Absorptionscharakteristik (16) gemäß der Position der UV-Absorptionskante (14).

2. Verfahren nach Anspruch 1,
   **dadurch gekennzeichnet, dass** als Absorptionscharakteristik (16) ein Absorptionsspektrum (12) erzeugt wird.

3. Verfahren nach einem der voranstehenden Ansprüche,
   **dadurch gekennzeichnet, dass** die wässrige Flüssigkeit mit ultraviolettem Licht (13a) im Wellenlängenbereich (13) von 100 nm bis 330 nm, insbesondere im Wellenlängenbereich (13) von 180 nm bis 260 nm, bestrahlt wird.

4. Verfahren nach einem der voranstehenden Ansprüche,
   **dadurch gekennzeichnet, dass** die wässrige Flüssigkeit zusätzlich mit Licht (13a) im Wellenlängenbereich von sichtbarem und/oder mittlerem Infrarot- und/oder nahem Infrarotlicht, insbesondere im Wellenlängenbereich (13) von 800 nm bis 1200 nm, bestrahlt wird

5. Verfahren nach einem der voranstehenden Ansprüche,
   **dadurch gekennzeichnet, dass** mehrere Intensitätsanteile (17) des anregenden Lichts (13a) in unterschiedlichen vorbestimmten Wellenlängenbereichen (13) getrennt voneinander erfasst werden, wobei insbesondere aus den mehreren getrennt erfassten Intensitätsanteilen (17) ein Intensitätsmuster (84) als Absorptionscharakteristik (16) erstellt wird.

**6.** Verfahren nach einem der voranstehenden Ansprüche, **dadurch gekennzeichnet, dass** die Flüssigkeitsmoleküle (37a) mit gepulstem Licht (13a), insbesondere mit A/C-moduliertem Licht (13a), angeregt werden, wobei insbesondere die Frequenz des durch die Flüssigkeit (10) transmittierten Intensitätsanteils (17) des gepulsten Lichts (13a) in mehreren unterschiedlichen vorbestimmten Wellenlängenbereichen (13) getrennt voneinander erfasst wird und/oder dass die Intensität des von der Lichtquelle (50) ausgestrahlten anregenden Lichts (13a) vor Eintritt in die Flüssigkeit (10) erfasst wird.

**7.** Verfahren zur Überwachung des pH-Wertes einer wässrigen Flüssigkeit (10), mit den Schritten

e) mehrfaches Erzeugen, insbesondere in vorbestimmten Zeitabständen oder kontinuierlich, einer Absorptionscharakteristik (16) der wässrigen Flüssigkeit (10) mit einem Verfahren nach einem der Ansprüche 1 bis 6, wobei insbesondere Proben aus der wässrigen Flüssigkeit (10) entnommen werden oder die wässrige Flüssigkeit (10) kontinuierlich an einer Lichtquelle (50) und/oder einer Detektoreinrichtung (58) vorbeigeführt wird; und
f) Erfassen der spektralen Verschiebung der Absorptionscharakteristik (16).

**8.** Verfahren zur Gewinnung von Trinkwasser (100) aus einem Treibstoff (106) für Luftfahrzeuge mit den Schritten

g) Elektrolyse des Treibstoffes (106) in einer Brennstoffzelle (104) zu Wasser (11) und weiteren Reaktionsprodukten (108);
h) Versetzen des Wassers (11) mit Mineralstoffen (110); und
i) Durchführen des Verfahrens zur Überwachung des pH-Wertes nach Anspruch 7.

**9.** Sensoranordnung (46) zur Ermittlung des pH-Werts einer wässrigen Flüssigkeit (10) umfassend die Flüssigkeitsmoleküle (37a) $H_2O$, $OH^-$ und $H_3O^+$

- eine Lichtquelle (50) zum Bestrahlen der wässrigen Flüssigkeit (10) mit ultraviolettem Licht (13a) zur Anregung von elektronischen Übergängen (37) in den Flüssigkeitsmolekülen (37a) $H_2O$, $OH^-$ und $H_3O^+$ der wässrigen Flüssigkeit (10),
- eine Trägereinrichtung (60) zum Positionieren der wässrigen Flüssigkeit (10) im Strahlengang (70) des ultravioletten Lichts (13a),
- eine Detektoreinrichtung (58) zum Erfassen des durch die wässrige Flüssigkeit (10) transmittierten Intensitätsanteils (17) des ultravioletten Lichts (13a);
- eine Umwandlungseinrichtung (86) zum Erzeugen einer Wellenlängen-Intensitäts-Absorptionscharakteristik (16) aus dem erfassten Intensitätsanteil (17), die die im Wellenlängenbereich von 100 bis 300 nm liegende, durch die Anregung von elektronischen Übergängen in den Flüssigkeitsmolekülen (37a) $H_2O$, $OH^-$ und $H_3O^+$ der wässrigen Flüssigkeit (10) hervorgerufene UV-Absorptionskante (14) umfasst,

und **gekennzeichnet durch**

- eine Einrichtung zum Zuordnen der erzeugten Absorptionscharakteristik (16) zu einer einem bestimmten pH-Wert der wässrigen Flüssigkeit zugehörenden Referenz-Absorptionscharakteristik (16) gemäß der Position der UV-Absorptionskante (14).

**10.** Sensoranordnung (46) nach Anspruch 9, **dadurch gekennzeichnet, dass** die Lichtquelle (50) durch eine LED (48) gebildet ist, deren ausgestrahltes Licht (13a) insbesondere einen Emissions-Peak (54) im Wellenlängenbereich (13) von 255 nm bis 270 nm und eine spektrale Breite (56) von 40 nm bis 60 nm aufweist und/oder dass die Lichtquelle (50) zum Ausstrahlen von gepulstem Licht (13a), insbesondere von A/C-moduliertem Licht (13a), ausgebildet ist.

**11.** Sensoranordnung (46) nach einem der Ansprüche 9 oder 10, **dadurch gekennzeichnet, dass** die Trägereinrichtung (60) eine Leitungseinrichtung (64) zum Vorbeileiten der wässrigen Flüssigkeit (10) an der Lichtquelle (50) und/oder der Detektoreinrichtung (58) und/oder einen für das anregende Licht (13a) optisch transparenten Bereich (74) aufweist, der insbesondere durch Saphir- oder Quarzfenster gebildet ist, und/oder dass eine Temperiereinrichtung (66) zum Temperieren der wässrigen Flüssigkeit (10) und/oder eine Temperaturmesseinrichtung (68) zum Messen der Temperatur der wässrigen Flüssigkeit (10) vor Bestrahlung der wässrigen Flüssigkeit (10) durch die Lichtquelle (50) vorgesehen ist.

**12.** Sensoranordnung (46) nach einem der Ansprüche 9 bis 11,
**dadurch gekennzeichnet, dass** die Detektoreinrichtung (58) wenigstens einen durch eine Photodiode (80) gebildeten Detektor (76) aufweist, der vorzugsweise aus Si, SiC, GaN oder ZnO gebildet ist.

**13.** Sensoranordnung (46) nach einem der Ansprüche 9 bis 12,
**dadurch gekennzeichnet, dass** die Detektoreinrichtung (58) ein Detektorarray (78) aufweist, das mehrere für die getrennte Erfassung des Intensitätsanteils (17) des anregenden Lichts (13a) in mehreren unterschiedlichen Wellenlängenbereichen (13) ausgebildete Detektoren (76) umfasst, die insbesondere durch Photodioden (80) mit auf unterschiedliche Wellenlängen eingestellten Bandpassfiltern (82) ausgebildet sind.

**14.** Sensoranordnung (46) nach einem der Ansprüche 9 bis 13,
**dadurch gekennzeichnet, dass** eine Selbsttesteinrichtung (92) zum Testen der Sensoranordnung (46) auf Funktionalität vorgesehen ist, die eine Gesamtüberwachungseinrichtung (94) zur gemeinsamen Überwachung aller elektronischen und optischen Bauteile der Sensoranordnung (46) und/oder eine Lichtquellenüberwachungseinrichtung (96) zur Überwachung der von der Lichtquelle (50) ausgestrahlten Lichtintensität aufweist.

**15.** Sensoranordnung (46) nach Anspruch 14,
**dadurch gekennzeichnet, dass** die Gesamtüberwachungseinrichtung (94) eine gepulste Lichtquelle (88) zum Ausstrahlen von die Flüssigkeitsmoleküle (52) der wässrigen Flüssigkeit (10) anregendem Licht (13a) und mehrere Detektoren (76) zum Erfassen der Pulsfrequenz des anregenden Lichts (13a) in mehreren unterschiedlichen Wellenlängenbereichen (13) getrennt voneinander aufweist, und/oder dass die Lichtquellenüberwachungseinrichtung (96) einen in dem Strahlengang (70) des anregenden Lichts (13a) vor Eintritt in die wässrige Flüssigkeit (10) angeordneten Strahlteiler (98) zum Ableiten eines Anteils des anregenden Lichts (13a) und einen breitbandigen Referenzdetektor (99) zum Erfassen der Intensität des abgeleiteten Lichts aufweist.

## Claims

**1.** Method of determining the pH-value of an aqueous liquid (10) comprising the liquid molecules (37a) $H_2O$, $OH^-$ and $H_3O^+$, the method comprising the steps of:

a) irradiating the aqueous liquid (10) with ultraviolet light (13a) for the stimulation of electronic transitions (37) within the liquid molecules (37a) $H_2O$, $OH^-$ and $H_3O^+$ of the aqueous liquid (10);
b) detecting the intensity portion (17) of the ultraviolet light (13a) transmitted by the aqueous liquid (10) by means of a detection device (58);
c) generating a wavelength intensity absorption characteristic (16) from the detected intensity portion (17) which comprises the UV absorption edge (14) caused by the stimulation of electronic transitions (37) within the liquid molecules (37a) $H_2O$, $OH^-$ and $H_3O^+$ of the aqueous liquid (10) and lying in the wavelength range of 100 to 300 nm;

**characterized by**

d) assigning the generated absorption characteristic (16) to a reference absorption characteristic (16) associated with a particular pH-value of the aqueous liquid (10) in accordance with the position of the UV absorption edge (14).

**2.** Method according to claim 1,
**characterized in that** an absorption spectrum (12) is generated as the absorption characteristic (16).

**3.** Method according to one of the preceding claims,
**characterized in that** the aqueous liquid (10) is irradiated with ultraviolet light (13a) in the wavelength range (13) of 100 nm to 300 nm, particularly in the wavelength range (13) of 180 nm to 260 nm.

**4.** Method according to one of the preceding claims,
**characterized in that** the aqueous liquid is additionally irradiated with light (13a) in the wavelength range of visible and/or medium infrared and/or near infrared light, particularly in the wavelength range (13) of 800 nm to 1200 nm.

**5.** Method according to one of the preceding claims,
**characterized in that** several intensity portions (17) of the stimulating light (13a) in different predetermined wavelength ranges (13) are detected separately form each other, wherein in particular an intensity pattern (84) is created as the absorption characteristic (16) from said several separately detected intensity portions (17).

6. Method according one of the preceding claims,
   **characterized in that** the liquid molecules (37a) are stimulated with pulsed light (13a), particularly with A/C-modulated light (13a), wherein in particular the frequency of the intensity portion (17) of the pulsed light (13a) transmitted through the liquid (10) in several different predefined wavelength ranges (13) are detected separately from each other and/or that the intensity of the stimulating light (13a) emitted from the light source (50) is detected before entering the liquid (10).

7. Method of monitoring the pH-value of an aqueous liquid (10), the method comprising the steps of:

   e) generating an absorption characteristic (16) of the aqueous liquid (10) multiple times and particularly at predefined time intervals or continuously using a method according to one of the claims 1 to 6, wherein in particular samples are taken from the aqueous liquid (10) or the aqueous liquid (10) is continuously guided past a light source (50) and/or a detection device (58); und
   f) detecting the spectral shift of the absorption characteristic (16).

8. Method for the production of drinking water (100) from a fuel (106) for aircrafts, the method comprising the steps of:

   g) electrolysis of the fuel (106) in a fuel cell (104) into water (11) and other reaction products (108);
   h) mixing the water (11) with mineral substances (110);
   i) performing the method of monitoring the pH-value according to claim 7.

9. Sensor arrangement (46) for determining the pH-value of an aqueous liquid (10) comprising the liquid molecules (37a) $H_2O$, $OH^-$ and $H_3O^+$,

   - a light source (50) for irradiating the aqueous liquid (10) with ultraviolet light (13a) for the stimulation of transitions (37) within the liquid molecules (37a) $H_2O$, $OH^-$ and $H_3O^+$ of the aqueous liquid (10),
   - a carrier device (60) for positioning the aqueous liquid (10) in the optical path (70) of the ultraviolet light (13a),
   - a detection device (58) for detecting the intensity portion (17) of the ultraviolet light (13a) transmitted through the aqueous liquid (10);
   - a conversion device (86) for generating a wavelength intensity absorption characteristic (16) from the detected intensity portion (17) comprising the UV absorption edge (14) caused by the stimulation of electronic transitions within the liquid molecules (37a) $H_2O$, $OH^-$ and $H_3O^+$ of the aqueous liquid (10) and lying in the wavelength range of 100 to 300 nm;

   **characterized by**

   - a device for assigning the generated absorption characteristic (16) to a reference absorption characteristic (16) associated with a particular pH-value of the aqueous liquid in accordance with the position of the UV absorption edge (14).

10. Sensor arrangement (46) according to claim 9,
    **characterized in that** the light source (50) is formed by a LED (48) the emitted light (13a) of which particularly has an emission peak (54) the wavelength range (13) of 255 nm to 270 nm and a spectral width (56) of 40 nm and 60 nm and/or that the light source (50) is adapted for emitting pulsed light (13a), particularly A/C-modulated light (13a).

11. Sensor arrangement (46) according to one of the claims 9 or 10, **characterized in that** the carrier device (60) comprises a conduit means (64) for guiding the aqueous liquid (10) past the light source (50) and/or past the detection device (58) and/or comprises an optically transparent region (74) for the stimulating light which is formed in particular by a sapphire or quartz window, and/or that a tempering unit (66) for tempering the aqueous liquid (10) and/or a temperature measuring unit (68) for measuring the temperature of the aqueous liquid (10) prior to irradiating the aqueous liquid (10) by the light source (50) are provided.

12. Sensor arrangement (46) according to one of the claims 9 to 11, **characterized in that** the detection device (58) at least includes one detector (76) constituted by a photodiode (80) that is preferably formed of Si, SiC, GaN or ZnO.

13. Sensor arrangement (46) according to one of the claims 9 to 12, **characterized in that** the detection device (58) includes a detector array (78) comprising multiple detectors (76) adapted for the separate detection of the intensity portion (17) of the stimulating light (13a) in several different wavelength ranges (13), the detectors being particularly constituted by photodiodes (80) with bandpass filters (82) set to different wavelengths.

14. Sensor arrangement (46) according to one of the claims 9 to 13, **characterized in that** a self testing device (92) for testing the senor arrangement (46) for its functioning is provided and comprises an overall monitoring device (94) for the common monitoring of all electronic and optical components of the sensor arrangement (46) and/or a light source monitoring device (96) for monitoring the light intensity emitted from the light source (50).

15. Sensor arrangement (46) according to claim 14, **characterized in that** the overall monitoring device (94) comprises a pulsed light source (88) for emitting light (13a) stimulating the liquid molecules (52) of the aqueous liquid (10), and several detectors (76) for detecting the pulse frequency of the stimulating light (13a) in several different wavelength ranges (13) separately form each other and/or that the light source monitoring device (96) comprises a beam splitter (98) for diverting a portion of the stimulated light (13a) arranged in the optical path (70) of the stimulating light (13a) before entering the aqueous liquid (10), and a broadband reference detector (99) for detecting the intensity of the diverted light.

## Revendications

1. Procédé de détermination du pH d'un liquide aqueux (10) qui contient les molécules de liquide (37a) $H_2O$, $OH^-$ et $H_3O^+$, comportant les étapes consistant à

    a) irradier le liquide aqueux (10) par une lumière ultraviolette (13a) pour exciter des transitions électroniques (37) dans les molécules de liquide (37a) $H_2O$, $OH^-$ et $H_3O^+$ du liquide aqueux (10) ;
    b) détecter par un moyen de détection (58) la part d'intensité (17) de la lumière ultraviolette (13a) transmise par le liquide aqueux (10),
    c) générer une caractéristique d'absorption (16) longueur d'onde/intensité à partir de la part d'intensité détectée (17), qui comprend la limite d'absorption UV (14) située dans la plage de longueur d'onde de 100 à 300 nm et provoquée par l'excitation de transitions électroniques (37) dans les molécules de liquide (37a) $H_2O$, $OH^-$ et $H_3O^+$ du liquide aqueux (10) ;

    et **caractérisé par** l'étape consistant à

    d) associer la caractéristique d'absorption générée (16) à une caractéristique d'absorption de référence (16), appartenant à un certain pH du liquide aqueux (10), selon la position de la limite d'absorption UV (14).

2. Procédé selon la revendication 1,
    **caractérisé en ce que**
    on génère à titre de caractéristique d'absorption (16) un spectre d'absorption (12).

3. Procédé selon l'une des revendications précédentes,
    **caractérisé en ce que**
    le liquide aqueux est irradié par une lumière ultraviolette (13a) dans la plage de longueur d'onde (13) de 100 nm à 330 nm, en particulier dans la plage de longueur d'onde (13) de 180 nm à 260 nm.

4. Procédé selon l'une des revendications précédentes,
    **caractérisé en ce que**
    le liquide aqueux est irradié en supplément par une lumière (13a) dans la plage de longueur d'onde de la lumière visible et/ou de la lumière infrarouge moyenne et/ou de la lumière infrarouge proche, en particulier dans la plage de longueur d'onde (13) de 800 nm à 1200 nm.

5. Procédé selon l'une des revendications précédentes,
    **caractérisé en ce que**
    on détecte plusieurs parts d'intensité (17) de la lumière excitante (13a) séparément les unes des autres dans différentes zones de longueur d'onde (13) prédéterminées, et on établit un motif d'intensité (84) à titre de caractéristique d'absorption à partir des plusieurs parts d'intensité (17) détectées séparément.

**6.** Procédé selon l'une des revendications précédentes,
**caractérisé en ce que**
les molécules de liquide (37a) sont excitées par une lumière pulsée (13a), en particulier par une lumière modulée A/C (13a), et en particulier la fréquence de la part d'intensité (17), transmise par le liquide (10), de la lumière pulsée (13a) est détectée séparément dans plusieurs plages de longueur d'onde (13) prédéterminées différentes et/ou l'intensité de la lumière (13a) excitante émise par la source de lumière (50) est détectée avant d'entrer dans le liquide (10).

**7.** Procédé de surveillance du pH d'un liquide aqueux (10), comprenant les étapes consistant à

e) générer plusieurs fois une caractéristique d'absorption (16) du liquide aqueux (10), en particulier à des intervalles temporels prédéterminés ou en continu, par un procédé selon l'une des revendications 1 à 6, dans lequel on prélève en particulier des échantillons du liquide aqueux (10) ou on fait passer le liquide aqueux (10) en continu le long d'une source de lumière (50) et/ou le long d'un moyen de détection (58) ; et
f) détecter le décalage spectral de la caractéristique d'absorption (16).

**8.** Procédé de récupération d'eau potable (100) à partir d'un carburant (106) pour aéronefs, comprenant les étapes consistant à g) réaliser l'électrolyse du carburant (106) dans une pile à combustible (104) pour donner de l'eau (11) et d'autres produits de réaction (108) ;

h) ajouter des minéraux (110) à l'eau (11) ; et
i) mettre en oeuvre le procédé de surveillance du pH selon la revendication 7.

**9.** Agencement capteur (46) destiné à la détermination du pH d'un liquide aqueux (10) qui contient les molécules de liquide (37a) $H_2O$, $OH^-$ et $H_3O^+$, comportant

- une source de lumière (50) pour irradier le liquide aqueux (10) par une lumière ultraviolette (13a) pour exciter des transitions électroniques (37) dans les molécules de liquide (37a) $H_2O$, $OH^-$ et $H_3O^+$ du liquide aqueux (10),
- un moyen de support (60) pour positionner le liquide aqueux (10) dans le trajet optique (70) de la lumière ultraviolette (13a),
- un moyen de détection (58) pour détecter la part d'intensité (17) de la lumière ultraviolette (13a) transmise par liquide aqueux (10),
- un moyen de transformation (86) pour générer une caractéristique d'absorption (16) longueur d'onde/intensité à partir de la part d'intensité détectée (17), qui comprend la limite d'absorption UV (14) située dans la plage de longueur d'onde de 100 à 300 nm et provoquée par l'excitation de transitions électroniques dans les molécules de liquide (37a) $H_2O$, $OH^-$ et $H_3O^+$ du liquide aqueux (10),

et **caractérisé par**

- un moyen d'association de la caractéristique d'absorption générée (16) à une caractéristique d'absorption de référence (16), appartenant à un certain pH du liquide aqueux (10), selon la position de la limite d'absorption UV (14).

**10.** Agencement capteur (46) selon la revendication 9,
**caractérisé en ce que**
la source de lumière (50) est formée par une diode électroluminescente (48) dont la lumière émise (13a) présente en particulier un pic d'émission (54) dans la plage de longueur d'onde (13) de 255 nm à 270 nm et une largeur spectrale (56) de 40 nm à 60 nm, et/ou **en ce que** la source de lumière (50) est réalisée pour émettre une lumière pulsée (13a), en particulier une lumière modulée A/C (13a).

**11.** Agencement capteur (46) selon l'une des revendications 9 ou 10, **caractérisé en ce que**
le moyen de support (60) comprend un organe d'acheminement (64) pour acheminer le liquide aqueux (10) le long d'une source de lumière (50) et/ou du moyen de détection (58) et/ou une zone optiquement transparente pour la lumière excitante (13a) formée en particulier par une fenêtre en saphir ou en quartz,
et/ou **en ce qu'**il est prévu un moyen de mise à température (66) pour mettre à température le liquide aqueux (10) et/ou un moyen de mesure de température (68) pour mesurer la température du liquide aqueux (10) avant d'irradier le liquide aqueux (10) par la source de lumière (50).

**12.** Agencement capteur (46) selon l'une des revendications 9 à 11, **caractérisé en ce que** le moyen de détection (58) comprend au moins un détecteur (76) formé par une photodiode (80), qui est réalisé de préférence en Si, SiC, GaN ou ZnO.

**13.** Agencement capteur (46) selon l'une des revendications 9 à 12, **caractérisé en ce que** le moyen de détection (58) comprend un réseau de détection (78) qui comprend plusieurs détecteurs (76) conçus pour la détection séparée de la part d'intensité (17) de la lumière excitante (13a) dans plusieurs plages de longueur d'onde différentes (13), qui sont réalisés en particulier par des photodiodes (80) à filtres passe-bande (82) adaptés à différentes longueurs d'onde.

**14.** Agencement capteur (46) selon l'une des revendications 9 à 13, **caractérisé en ce que** il est prévu un système d'autocontrôle (92) pour contrôler l'aptitude de fonctionnement de l'agencement capteur (46), qui comprend un système de surveillance d'ensemble (94) pour la surveillance commune de tous les composants électroniques et optiques de l'agencement capteur (46) et/ou un système de surveillance de source de lumière (96) pour la surveillance de l'intensité lumineuse émise par la source de lumière (50).

**15.** Agencement capteur (46) selon la revendication 14, **caractérisé en ce que** le système de surveillance d'ensemble (94) comprend une source de lumière pulsée (88) pour émettre une lumière (13a) excitant les molécules de liquide (52) du liquide aqueux (10) et plusieurs détecteurs (76) pour détecter la fréquence d'impulsion de la lumière excitante (13a) dans plusieurs plages de longueur d'onde (13) différentes séparément les unes des autres, et/ou **en ce que** le système de surveillance de source de lumière (96) comprend un diviseur de faisceau (98) agencé dans le trajet optique (70) de la lumière excitante (13a) avant d'entrer dans le liquide aqueux (10) et est destiné à dévier une partie de la lumière excitante (13a) et comprend un détecteur de référence (99) à large bande pour détecter l'intensité de la lumière déviée.

FIG 1

EP 2 618 129 B1

## FIG 2A

$\nu_1$

## FIG 2B

$\nu_3$

## FIG 2C

$\nu_2$

## FIG 2D

x

19a

37a

## FIG 2E

y

## FIG 2F

z

## FIG 3

| Gas | $\nu_1$, cm-1 | $\nu_2$, cm-1 | $\nu_3$, cm-1 |
|---|---|---|---|
| $H_2^{16}O$ | 3657,05 | 1594,75 | 3755,93 |
| $H_2^{17}O$ | 3653,15 | 1591,32 | 3748,32 |
| $H_2^{18}O$ | 3649,69 | 1588,26 | 3741,57 |
| $HD^{16}O$ | 2723,68 | 1403,48 | 3707,47 |
| $D_2^{16}O$ | 2669,40 | 1178,38 | 2787,92 |
| $T_2^{16}O$ | 2233,9 | 995,37 | 2366,61 |

FIG 4

FIG 5

## FIG 6

## FIG 7

## FIG 8

## FIG 9

**FIG 10A**

**FIG 10B**

**FIG 10C**

# FIG 11

# FIG 12

FIG 13

FIG 14

## FIG 15

## FIG 16

## FIG 17

**EP 2 618 129 B1**

**IN DER BESCHREIBUNG AUFGEFÜHRTE DOKUMENTE**

**In der Beschreibung aufgeführte Patentdokumente**

- US 20080285011 A1

- US 7842507 B1

**In der Beschreibung aufgeführte Nicht-Patentliteratur**

- **M. STUTZMANN.** *Phil. Mag.,* 1987, vol. 56, 63-70